(19) Europäisches Patentamt
European Patent Office
Office européen des brevets

(11) **EP 2 071 954 A1**

(12) **EUROPÄISCHE PATENTANMELDUNG**

(43) Veröffentlichungstag:
**24.06.2009 Patentblatt 2009/26**

(51) Int Cl.:
*A01N 47/44* (2006.01)    *A01P 1/00* (2006.01)

(21) Anmeldenummer: **07150147.2**

(22) Anmeldetag: **19.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder:
• **Bayer CropScience AG**
  **40789 Monheim (DE)**

• **Akatechnology GmbH**
  **1210 Wien (AT)**

(72) Erfinder: **Die Erfindernennung liegt noch nicht vor**

Bemerkungen:
Die Patentansprüche 11-20 gelten als fallen gelassen, da die entsprechenden Anspruchsgebühren nicht entrichtet wurden (R. 45 (3) EPÜ).

(54) **Verwendung von polymeren Guanidin-Derivaten zum Bekämpfen von unerwünschten Mikroorganismen im Pflanzenschutz**

(57)    Die vorliegende Erfindung betrifft die Verwendung von polymeren Guanidin-Derivaten zur kurativen und/oder präventiven Behandlung von unerwünschten Mikroorganismen wie Bakterien und phytopathogene Pilze im Pflanzenschutz einschließlich der Behandlung von Saatgut. Weiterhin betrifft die Erfindung neue Wirkstoffkombinationen enthaltend wenigstens ein polymeres Guanidin-Derivat und wenigstens einen weiteren fungiziden Wirkstoff, deren Verwendung zur kurativen oder präventiven Behandlung von unerwünschten Mikroorganismen im Pflanzenschutz einschließlich der Behandlung von Saatgut, sowie nicht zuletzt das behandelte Saatgut selbst.

EP 2 071 954 A1

**Beschreibung**

Die vorliegende Erfindung betrifft die Verwendung von polymeren Guanidin-Derivaten zur kurativen und/oder präventiven Behandlung von unerwünschten Mikroorganismen wie Bakterien und phytopathogene Pilze im Pflanzenschutz einschließlich der Behandlung von Saatgut. Weiterhin betrifft die Erfindung neue Wirkstoffkombinationen enthaltend wenigstens ein polymeres Guanidin-Derivat und wenigstens einen weiteren fungiziden Wirkstoff, deren Verwendung zur kurativen oder präventiven Behandlung von unerwünschten Mikroorganismen im Pflanzenschutz einschließlich der Behandlung von Saatgut, sowie nicht zuletzt das behandelte Saatgut selbst.

Biozide Polymere auf der Basis von Guanidinium-Hydrochlorid, insbesondere deren Wirkung gegen *Escherichia* coli-Bakterien sind bereits bekannt (vgl. WO 01/85676). Weiterhin ist bereits bekannt, dass solche Guanidin-Derivate als fungizide Mittel verwendet werden können (vgl. WO 2006/047800). Von besonderer Bedeutung sind die Polymere Akacie®, das Poly-[2-(2-ethoxy)-ethoxyethyl-guanidiniumchlorid], und Akacid plus®, eine 3:1-Mischung aus Poly-(hexamethylenguanidiniumchlorid) und Poly-[2-(2-ethoxy)-ethoxyethyl)-guanidiniumchlorid] (vgl. Antibiotika Monitor, 22. Jahrgang, Heft 1/2/2006, Online-Ausgabe unter http://www.antibiotikamonitor.at/06_12/06_12_inhalt.htm).

Da sich die ökologischen und ökonomischen Anforderungen an moderne Pflanzenschutzmittel laufend erhöhen, beispielsweise was Wirkungsspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Mittel zu entwickeln, die zumindest in Teilbereichen die genannten Anforderungen zu erfüllen helfen.

Die vorliegende Erfindung stellt eine Verwendung zur Verfügung, welches wenigstens in Teilaspekten die gestellte Aufgabe löst. Außerdem werden Wirkstoffkombinationen zur Verfügung gestellt, welche ebenfalls wenigstens in einigen Aspekten die gestellte Aufgabe lösen.

Es wurde nun überraschenderweise gefunden, dass sich polymere Guanidin-Derivate, welche in Form ihres Hydroxids vorliegen (im Folgenden Guanidinium-Hydroxide), besonders gut zur kurativen und/oder präventiven Behandlung von unerwünschten Mikroorganismen wie Bakterien und phytopathogenen Pilzen im Pflanzenschutz einschließlich der Behandlung von Saatgut verwenden lassen.

Die erfindungsgemäß verwendbaren Guanidinium-Hydroxide basieren auf einem Diamin, welches Oxyalkylenketten und/oder Alkylengruppen zwischen zwei Aminogruppen enthält, erhältlich durch Polykondensation eines Guanidin-Säureadditionssalzes mit dem Diamin, wobei ein Polykondensationsprodukt in Salzform erhalten wird, welches anschließend durch basischen Anionenaustausch in die Hydroxidform übergeführt wird.

Eine bevorzugte Ausführungsform des erfindungsgemäß verwendbaren Guanidinium-Hydroxids besteht darin, dass als Vertreter der Reihe der Polyoxyalkylen-Guanidin-Salze solche unter Einsatz von Triethylenglykoldiamin (relative Molekularmasse: 148), von Polyoxypropylendiamin (relative Molekularmasse: 230) sowie von Polyoxyethylendiamin (relative Molekularmasse: 600), oder auch von Polyhexamethylendiamin (relative Molekularmasse: erhalten werden.

Eine weitere bevorzugte Ausführungsform des erfindungsgemäß verwendbaren Guanidinium-Hydroxids ist dadurch gekennzeichnet, dass als das polymere Guanidin-Derivat Poly-[2-(2-ethoxy-ethoxyethyl)-guanidinium-hydroxid] mit mindestens 3 Guanidinium-Resten enthalten ist.

Weiterhin bevorzugt verwendbar sind Guanidinium-Hydroxide, bei denen das Polykondensationsprodukt in Salzform zuvor durch Polykondensation eines Guanidin-Säureadditionssalzes mit einem Alkylendiamin und einem Oxyalkylendiamin im Molverhältnis zwischen 4:1 und 1:4 (Alkylendiamin/Oxyalkylendiamin), bevorzugt zwischen 3:1 und 1:3, erhältlich ist.

Bevorzugt ist als Diamin ein Alkylendiamin der allgemeinen Formel

$$H_2N\text{-}(CH_2)_n\text{-}NH_2$$

vorgesehen ist, in welcher n eine ganze Zahl zwischen 2 und 10, insbesondere 6, ist.

Weiterhin bevorzugt ist als Oxyalkylendiamin eine Verbindung der allgemeinen Formel

$$H_2N\text{-}[CH_2)O)]_n\text{-}(CH_2)_2NH_2$$

vorgesehen ist, in welcher m eine ganze Zahl zwischen 2 und 5, insbesondere 2, ist.

Die mittlere Molekularmasse des erfindungsgemäß verwendbaren Guanidinium-Hydroxids liegt bevorzugt im Bereich 500 bis 3.000, besonders bevorzugt im Bereich 500 bis 2.000, ganz besonders bevorzugt im Bereich 500 bis 1.500. Weiterhin bevorzugt ist eine mittlere Molekularmasse von 1000.

Die als Ausgangsstoffe für die erfindungsgemäß verwendbaren Guanidinium-Hydroxide einsetzbaren Salze, insbesondere die Hydrochloride, sind bekannt (vgl. WO 01/85676).

Beispielsweise erhält man das erfindungsgemäß verwendbare Guanidinium-Hydroxid Poly-[2-(2-ethoxy-ethoxyethyl)-guanidinium-hydroxid] mit einer mittleren Molekularmasse von etwa 1000, indem man 4,43 Mol Guanidinium-Hydrochlorid in 4,03 Mol Triethylenglykoldiamin bei 50°C löst. Anschließend erwärmt man auf 120°C und rührt 2 Stunden bei dieser Temperatur. Danach wird die Temperatur 2 Stunden gehalten, dann ein Vakuum (0,1 bar) angelegt und 2 weitere Stunden unter Vakuum bei 170°C gerührt. Anschließend wird auf Normaldruck belüftet, auf 120°C abkühlen gelassen und mit entmineralisiertem Wasser auf ca. 50 % verdünnt. Mit Phosphorsäure wird auf einen pH-Wert von ca. 6 neutralisiert, abkühlen gelassen und auf die gewünschte Konzentration verdünnt. Anschließend wird die Hydroxid-Form hergestellt, indem die zuvor erhaltene Lösung mit einem stark alkalischen Anionenaustauscher in Hydroxid-Form behandelt wird, zweckmäßigerweise in einer Austauschersäule (z.B. "Ambersep 900 OH" oder "Lewatit MP 500"). So erhält man das erfindungsgemäß verwendbare Guanidinium-Hydroxid mit folgenden Charakteristika: Summenformel: $C_{21}H_{51}N_9O_5$ bzw. 49,5 % Kohlenstoff, 10 % Wasserstoff, 24,8 % Stickstoff und 15,7 % Sauerstoff.

Die vorliegende Erfindung betrifft weiterhin Wirkstoffkombinationen bzw. Mittel enthaltend wenigstens ein Guanidinium-Hydroxid und wenigstens einen weiteren fungiziden Wirkstoff.

Es wurde nun überraschenderweise gefunden, dass die erfindungsgemäßen Wirkstoffkombinationen bzw. Mittel nicht nur einen additiven Effekt der Wirkung der Einzelkomponenten zeigt, sondern einen synergistischen Effekt aufweist. Dadurch kann zum einen die übliche Aufwandmenge der Einzelsubstanzen verringert werden. Zum anderen bieten die erfindungsgemäßen Wirkstoffkombinationen auch dann noch einen hohen Grad an Wirkung gegen Phytopathogene, wenn die Einzelverbindungen in solchen Mengen eingesetzt werden, in denen sie selbst keine (ausreichende) Wirkung mehr zeigen. Dies erlaubt grundsätzlich eine Verbreiterung des Wirkungsspektrums einerseits und eine höhere Sicherheit bei der Handhabung andererseits.

Neben der fungiziden synergistischen Wirkung können die erfindungsgemäßen Wirkstoffkombinationen weitere überraschende Eigenschaften haben, die man im weiteren Sinn ebenfalls als synergistisch bezeichnen kann, wie z.B.: die Erweiterung des Wirkungsspektrums, z.B. auf resistente Erreger von Pflanzenkrankheiten; geringere Aufwandmengen der Wirkstoff; ausreichende Schädlingsbekämpfung mit Hilfe der erfindungsgemäßen Wirkstoffkombinationen auch mit solchen Aufwandmengen, bei denen die Einzelwirkstoffe keine oder fast keine Wirkung zeigen; vorteilhaftes Verhalten beim Formulieren oder während der Anwendung, z.B. während des Mahlens, Siebens, Emulgierens, Lösens oder Ausbringens; verbesserte Lager- bzw. Lichtstabilität; vorteilhaftere Rückstandsbildung; verbessertes toxikologisches oder ökotoxikologisches Verhalten; verbesserte Eigenschaften für die Pflanze, z.B. besseres Wachstum, gesteigerte Ernteerträge, besser ausgebildetes Wurzelsystem, größere Blattfläche, grünere Blätter, stärkere Schösslinge, geringerer Einsatz von Saatgut, geringere Phytotoxizität, Mobilisierung der pflanzeneigenen Abwehr, gute Pflanzenverträglichkeit. So tragen die erfindungsgemäßen Wirkstoffkombinationen bzw. Mittel bei Anwendung deutlich zur Gesunderhaltung junger Getreidebestände bei, wodurch die Überwinterungsleistung des behandelten Getreidesaatgutes gesteigert sowie die Qualitäts- und Ertragsbildung abgesichert wird. Die erfindungsgemäßen Wirkstoffkombinationen können außerdem zu einer verbesserten systemischen Wirkung beitragen. Auch wenn die Einzelwirkstoffe der Kombination keine ausreichenden systemischen Eigenschaften besitzen, können die erfindungsgemäßen Wirkstoffkombinationen diese Eigenschaft durchaus aufweisen. Ähnlich können die erfindungsgemäßen Wirkstoffkombinationen zu einer erhöhten Persistenz der fungiziden Wirkung führen.

Bei dem eingesetzten Guanidinium-Hydroxid (Komponente A), handelt es sich bevorzugt um Poly-[2-(2-ethoxy-ethoxyethyl)-guanidinium-hydroxid] mit einer mittleren Molekularmasse von etwa 1000 (A-1), einer mittleren Molekularmasse von etwa 1500 (A-2), einer mittleren Molekularmasse von etwa 500 (A-3), einer mittleren Molekularmasse von etwa 2000 (A-4), einer mittleren Molekularmasse von etwa 2500 (A-5) oder einer mittleren Molekularmasse von etwa 3000 (A-6), sowie außerdem ein Polykondensat aus Poly-(hexamethylen-guanidinium-hydroxid) und Poly-[2-(2-ethoxy)-ethoxyethyl)-guanidinium-hydroxid] im Molverhältnis 3:1 (A-7).

Der fungizide Mischpartner ist ausgewählt aus

(B) Inhibitoren (oder Salzen davon) der Ergosterol-Biosynthese,

bevorzugt ausgewählt aus (B-1) Aldimorph (1704-28-5), (B-2) Azaconazole (60207-31-0), (B-3) Bitertanol (55179-31-2), (B-4) Bromuconazole (116255-48-2), (B-5) Cyproconazole (113096-99-4), (B-6) Diclobutrazole (75736-33-3), (B-7) Difenoconazole (119446-68-3), (B-8) Diniconazole (83657-24-3), (B-9) Diniconazole-M (83657-18-5), (B-10) Dodemorph (1593-77-7), (B-11) Dodemorph acetate (31717-87-0), (B-12) Epoxiconazole (106325-08-0), (B-13) Etaconazole (60207-93-4), (B-14) Fenarimol (60168-88-9), (B-15) Fenbuconazole (114369-43-6), (B-16) Fenhexamid (126833-17-8), (B-17) Fenpropidin (67306-00-7), (B-18) Fenpropimorph (67306-03-0), (B-19) Fluquinconazole (136426-54-5), (B-20) Flurprimidol (56425-91-3), (B-21) Flusilazole (85509-19-9), (B-22) Flutriafol (76674-21-0), (B-23) Furconazole (112839-33-5), (B-24) Furconazole-cis (112839-32-4), (B-25) Hexaconazole (79983-71-4), (B-26) Imazalil (60534-80-7), (B-27) Imazalil-sulfate (58594-72-2), (B-28) Imibenconazole (86598-92-7), (B-29) Ipconazole (125225-28-7), (B-30) Metconazole (125116-23-6), (B-31) Myclobutanil (88671-89-0), (B-32) Naftifine (65472-88-0), (B-33) Nuarimol (63284-71-9), (B-34) Oxpoconazole (174212-12-5), (B-35) Paclobutrazol (76738-62-0), (B-36) Pefurazoate (101903-30-4), (B-37) Penconazole (66246-88-6), (B-38) Piperalin (3478-94-2), (B-39) Prochloraz (67747-09-5), (B-40) Propiconazole (60207-90-1), (B-41) Prothioconazole (178928-70-6), (B-42) Pyributicarb (88678-67-5), (B-43) Pyrifenox (88283-41-4), (B-44) Quinconazole (13970-75-8), (B-45) Simeconazole (149508-90-7), (B-46) Spiroxamine (118134-30-8), (B-47) Tebuconazole (107534-96-3), (B-48) Terbinafine (91161-71-6), (B-49) Tetraconazole (112281-77-3), (B-50) Triadimefon (43121-43-3), (B-51) Triadimenol (89482-17-7), (B-52) Tridemorph (81412-43-3), (B-53) Triflumizole (68694-11-1), (B-54) Triforine (26644-46-2), (B-55) Triticonazole (131983-72-7), (B-56) Uniconazole (83657-22-1), (B-57) Viniconazole (77174-66-4), (B-58) Voriconazole (137234-62-9), (B-59) 1-(4-Chlorphenyl)-2-(1H-1,2,4-triazol-1-yl)cycloheptanol (129586-32-9), (B-60) Methyl 1-(2,2-dimethyl-2,3-dihydro-1H-inden-1-yl)-1H-imidazole-5-carboxylate (11323-95-0), (B-61) O-{1-[(4-Methoxyphenoxy)methyl]-2,2-dimethylpropyl} 1H-imidazole-1-carbothioate (111226-71-2), besonders bevorzugt ausgewählt aus (B-3) Bitertanol, (B-5) Cyproconazole, (B-12) Epoxiconazole, (B-17) Fenpropidin, (B-18) Fenpropimorph, (B-19) Fluquinconazole, (B-30) Metconazole, (B-40) Prothioconazole, (B-46) Spiroxamine, (B-47) Tebuconazole, (B-51) Triadimenol; oder

(C) Atmungsketten-Inhibitoren (oder Salzen davon) am Komplex I oder II,

bevorzugt ausgewählt aus (C-1) Diflumetorim (130339-07-0), (C-2) Bixafen [N-(3',4'-Dichlor-5-fluor-1,1'-biphenyl-2-yl)-3-(difluorinethyl)-1-methyl-1H-pyrazol-4-carboxamid], (C-3) Boscalid (188425-85-6), (C-4) Carboxin (5234-68-4), (C-5) Fenfuram (24691-80-3), (C-6) Fluopyram {N-{2-[3-Chlor-5-(trifluormethyl)pyridin-2-yl]ethyl}-2-(trifluormethyl)benzamid)}, (C-7) Flutolanil (66332-96-5), (C-8) Furametpyr (123572-88-3), (C-9) Furmecyclox (60568-05-0), (C-10) Mepronil (55814-41-0), (C-11) Oxycarboxin (5259-88-1), (C-12) Penthiopyrad (183675-82-3), (C-13) Thifluzamide (130000-40-7), (C-14) N-[2-(1,3-Dimethylbutyl)phenyl]-5-fluor-1,3-dimethyl-1H-pyrazol-4-carboxamid (bekannt aus WO 03/010149), (C-15) N-{2-[1,1'-Bi(cyclopropyl)-2-yl]phenyl}-3-(difluormethyl)-1-methyl-1H-pyrazol-4-carboxamid, (C-16) 3-(Difluormethyl)-N-[(9R)-9-isopropyl-1,2,3,4-tetrahydro-1,4-methanonaphthalen-5-yl]-1-methyl-1H-pyrazol-4-carboxamid, (C-17) 3-(Difluormethyl)-N-[(9S)-9-isopropyl-1,2,3,4-tetrahydro-1,4-methanonaphthalen-5-yl]-1-methyl-1H-pyrazol-4-carboxamid, (C-18) 1-Methyl-N-[2-(1,1,2,2-tetrafluorethoxy)phenyl]-3-(trifluormethyl)-1H-pyrazol-4-carboxamid, (C-19) 3-(Difluormethyl)-1-methyl-N-[2-(1,1,2,2-tetrafluorethoxy)phenyl]-1H-pyrazol-4-carboxamid, (C-20) 1-Methyl-3-(trifluormethyl)-N-[2'-(trifluormethyl)biphenyl-2-yl]-1H-pyrazol-4-carboxamid, (C-21) N-(4'-Chlorbiphenyl-2-yl)-3-(difluormethyl)-1-methyl-1H-pyrazol-4-carboxamid, (C-22) N-(2',4'-Dichlorbiphenyl-2-yl)-3-(difluormethyl)-1-methyl-1H-pyrazol-4-carboxamid, (C-23) 3-(Difluor-methyl)-1-methyl-N-[4'-(trifluormethyl)biphenyl-2-yl]-1H-pyrazol-4-carboxamid, (C-24) N-(2',5'-Difluorbiphenyl-2-yl)-1-methyl-3-(trifluormethyl)-1H-pyrazol-4-carboxamid, (C-25) 3-(Difluormethyl)-N-[4'-(3,3-dimethylbut-1-in-1-yl)-biphenyl-2-yl]-1-methyl-1H-pyrazol-4-carboxamid (bekannt aus WO 04/058723), (C-26) 3-(Difluormethyl)-1-methyl-N-(4'-prop-1-in-1-ylbiphenyl-2-yl)-1H-pyrazol-4-carboxamid (bekannt aus WO 04/058723), (C-27) 5-Fluor-1,3-dimethyl-N-(4'-prop-1-in-1-ylbiphenyl-2-yl)-1H-pyrazol-4-carboxamid (bekannt aus WO 04/058723), (C-28) 2-Chlor-N-(4'-prop-1-in-1-ylbiphenyl-2-yl)-nicotinamid (bekannt aus WO 04/058723), (C-29) N-[4'-(Ethinylbiphenyl-2-yl]-3-(difluorinethyl)-1-methyl-1H-pyrazol-4-carboxamid (bekannt aus WO 04/058723), (C-30) N-(4'-Ethinylbiphenyl-2-yl)-5-fluor-1,3-dimethyl-1H-pyrazol-4-carboxamid (bekannt aus WO 04/058723), (C-31) 2-Chlor-N-(4'-ethinylbiphenyl-2-yl)-nicotinamid (bekannt aus WO 04/058723), (C-32) 3-(Difluormethyl)-N-[4'-(3,3-dimethylbut-1-in-1-yl)-biphenyl-2-yl]-1-methyl-1H-pyrazol-4-carboxamid (bekannt aus WO 04/058723), (C-33) N-[4'-(3,3-Dimethylbut-1-in-1-yl) biphenyl-2-yl]-5-fluor-1,3-dimethyl-1H-pyrazol-4-carboxamid (bekannt aus WO 04/058723), (C-34) 2-Chlor-N-[4'-(3,3-dimethylbut-1-in-1-yl)biphenyl-2-yl]-nicotinamid (bekannt aus WO 04/058723), (C-35) 4-(Difluormethyl)-2-methyl-N-[4'-(trifluormethyl)-1,1'-biphenyl-2-yl]-1,3-thiazol-5-carboxamid (bekannt aus WO 04/058723), (C-36) 5-Fluor-N-[4'-(3-hydroxy-3-methylbut-1-in-1-yl)biphenyl-2-yl]-1,3-dimethyl-1H-pyrazol-4-carboxamid (bekannt aus WO 04/058723), (C-37) 2-Chlor-N-[4'-(3-hydroxy-3-methylbut-1-in-1-yl)biphenyl-2-yl]-nicotinamid (bekannt aus WO 04/058723), (C-38) 3-Difluorinethyl-N-[4'-(3-methoxy-3-methylbut-1-in-1-yl)biphenyl-2-yl]-1-methyl-1H-pyrazol-4-carboxamid (bekannt aus WO 04/058723), (C-39) 5-Fluor-N-[4'-(3-methoxy-3-methylbut-1-in-1-yl)biphenyl-2-yl]-1,3-dimethyl-1H-pyrazol-4-carboxamid (bekannt aus WO 04/058723), (C-40) 2-Chlor-N-[4'-(3-methoxy-3-methylbut-1-in-1-yl)biphenyl-2-yl]-nicotinamid (bekannt aus WO 04/058723), bevorzugt ausgewählt aus (C-2) Bixafen, (C-3) Boscalid, (C-4) Carboxin, (C-6) Fluopyram, (C-12) Penthiopyrad, (C-14) N-[2-(1,3-Dimethylbutyl)phenyl]-5-fluor-1,3-dimethyl-1H-pyrazol-4-carboxamid, (C-15) N-{2-[1,1'-Bi(cyclopropyl)-2-yl]phenyl}-3-(difluormethyl)-1-methyl-1H-pyrazol-4-carboxamid, (C-16) 3-(Difluormethyl)-N-[(9R)-9-isopropyl-1,2,3,4-tetrahydro-1,4-methanonaphthalen-5-yl]-1-methyl-1H-pyrazol-4-carboxamid, (C-17) 3-(Difluormethyl)-N-[(9S)-9-isopropyl-1,2,3,4-tetrahydro-1,4-methanonaphthalen-5-yl]-1-methyl-1H-pyrazol-4-carboxamid, (C-19) 3-(Difluormethyl)-1-methyl-N-[2-(1,1,2,2-tetrafluorethoxy)phenyl]-1H-pyrazol-4-carboxamid, (C-25) 3-(Difluormethyl)-N-[4'-(3,3-dimethylbut-1-in-1-yl)biphenyl-2-yl]-1-methyl-1H-pyrazol-4-carboxamid;
oder

(D) Atmungsketten-Inhibitoren (oder Salzen davon) am Komplex III,

bevorzugt ausgewählt aus (D-1) Famoxadone (131807-57-3), (D-2) Fenamidone (161326-34-7), (D-3) Amisulbrom (348635-87-0), (D-4) Azoxystrobin (131860-33-8), (D-5) Cyazofamid (120116-88-3), (D-6) Dimoxystrobin (141600-52-4), (D-7) Enestrobin (238410-11-2), (D-8) Fluoxastrobin (361377-29-9), (D-9) Kresoxim-methyl (143390-89-0), (D-10) Metominostrobin (133408-50-1), (D-11) Orysastrobin (189892-69-1), (D-12) Picoxystrobin (117428-22-5), (D-13) Pyraclostrobin (175013-18-0), (D-14) Pyribencarb (799247-52-2), (D-15) Trifloxystrobin (141517-21-7), (D-16) 5-Methoxy-2-methyl-4-(2-{[({(1E)-1-[3-(trifluormethyl)phenyl]ethyliden} amino)oxy] methyl }phenyl)-2,4-dihydro-3H-1,2,4-triazol-3-on, (D-17) (2E)-2-(2-{[6-(3-Chlor-2-methyl-phenoxy)-5-fluor-4-pynmidinyl]oxy}phenyl)-2-(methoxyimino)-N-methylethanamid, (D-18) 2-Chloro-N-(2,3-dihydro-1,1,3-trimethyl-1H-inden-4-yl)-3-pyridincarboxamide (119899-14-8), (D-19) (2E)-2-(Methoxyimino)-N-methyl-2-(2-{[({(1E)-1-[3-(trifluormethyl)phenyl]ethyliden} amino)oxy]methyl}-phenyl)ethanamid, (D-20) N-(3-Ethyl-3,5,5-trimethylcyclohexyl)-3-(formylamino)-2-hydroxy-benzamide (226551-21-9), (D-21) (2E)-2-(Methoxyimino)-N-methyl-2-{2-[(E)-({1-[3-(trifluormethyl)phenyl]ethoxy}imino)methyl]-phenyl}ethanamid, (D-22) (2E)-2-{2-[({[(1E)-1-(3-{[(E)-1-Huoro-2-phenylvinyl]oxy}phenyl)ethylidene]aminooxy) methyl]-phenyl}-2-(methoxyimino)-N-methylacetamide (326896-28-0)

besonders bevorzugt ausgewählt aus (D-4) Azoxystrobin, (D-6) Dimoxystrobin, (D-8) Fluoxastrobin, (D-9) Kresoximmethyl, (D-10) Metominostrobin, (D-15) Trifloxystrobin, (D-11) Orysastrobin, (D-12) Picoxystrobin, (D-13) Pyraclostrobin; oder

(E) Inhibitoren (oder Salzen davon) der Mitose und Zellteilung,

bevorzugt ausgewählt aus
(E-1) Benomyl (17804-35-2), (E-2) Carbendazim (10605-21-7), (E-3) Chlorfenazole (3574-96-7), (E-4) Diethofencarb (87130-20-9), (E-5) Ethaboxam (162650-77-3), (E-6) Fluopicolide (239110-15-7), (E-7) Fuberidazole (3878-19-1), (E-8) Pencycuron (66063-05-6), (E-9) Profenofos (41198-08-7), (E-10) Thiabendazole (148-79-8), (E-11) Thiophanate (23564-06-9), (E-12) Thiophanate-methyl (23564-05-8), (E-13) Zoxamide (156052-68-5), (E-14) 5-Chlor-6-(2,4,6-trifluorphenyl)-7-(4-methylpiperidin-1-yl)[1,2,4]triazolo[1,5-a]pyrirnidin (214706-53-3),
besonders bevorzugt ausgewählt aus (E-2) Carbendazim, (E-6) Fluopicolide, (E-8) Pencycuron, (E-10) Thiabendazole, (E-11) Thiophanate, (E-12) Thiophanate-methyl, (E-13) Zoxamide, (E-14) 5-Chlor-6-(2,4,6-trifluorphenyl)-7-(4-methylpiperidin-1-yl)[1,2,4]triazolo[1,5-a]pyrimidin; oder

(F) Multisite-Wirkstoffen (oder Salzen davon),

bevorzugt ausgewählt aus
(F-1) Bordeaux mixture (8011-63-0), (F-2) Captafol (2425-06-1), (F-3) Captan (133-06-2), (F-4) Chorothalonil (1897-45-6), (F-5) Copper hydroxide (20427-59-2), (F-6) Copper naphthenate (1338-02-9), (F-7) Copper oxide (1317-39-1), (F-8) Copper oxychlorid (1332-40-7), (F-9) Copper sulphate (7758-98-7), (F-10) Dichlofluanid (1085-98-9), (F-11) Dithianon (3347-22-6), (F-12) Dodine (2439-10-3), (F-13) Ferbam (14484-64-1), (F-14) Fluorofolpet (719-96-0), (F-15) Folpet (133-07-3), (F-16) Guazatine (108173-90-6), (F-17) Iminoctadine (13516-27-3), (F-18) Iminoctadine triacetate (57520-17-9), (F-19) Mancopper (53988-93-5), (F-20) Mancozeb (8018-01-7), (F-21) Maneb (12427-38-2), (F-22) Metiram (9006-42-2), (F-23) Oxine-copper (10380-28-6), (F-24) Propineb (12071-83-9), (F-25) Schwefel und Schwefelzubereitungen einschließlich Calciumpolysulphide, (F-26) Thiram (137-26-8), (F-27) Tolylfluanid (731-27-1), (F-28) Zineb (12122-67-7), (F-29) Ziram (137-30-4);
besonders bevorzugt ausgewählt aus
(F-4) Chorothalonil, (F-10) Dichlofluanid, (F-12) Dodine, (F-14) Fluorofolpet, (F-15) Folpet, (F-16) Guazatine, (F-17) Iminoctadine, (F-18) Iminoctadine triacetate, (F-20) Mancozeb, (F-21) Maneb, (F-22) Metiram, (F-24) Propineb, (F-26) Thiram, (F-27) Tolylfluanid, (F-28) Zineb, (F-29) Ziram; oder

(G) folgenden weiteren Fungiziden (oder Salzen davon,

bevorzugt ausgewählt aus (G-1) Acibenzolar-S-methyl (135158-54-2), (G-2) Isotianil (224049-04-1), (G-3) Probenazole (27605-76-1), (G-4) Tiadinil (223580-51-6), (G-5) Andoprim (23951-85-1), (G-6) Blasticidin-S (2079-00-7), (G-7) Cyprodinyl (121552-61-2), (G-8) Kasugamycin (6980-18-3), (G-9) Mepanipyrim (110235-47-7), (G-10) Pyrimethanil (53112-28-0), (G-11) Fentin-acetat (900-95-8), (G-12) Fentin-chlorid (639-58-7), (G-13) Fentin-hydroxid (76-87-9), (G-14) Silthiofam (175217-20-6), (G-15) Benthiavalicarb (177406-68-7), (G-16) Dimethomorph (110488-70-5), (G-17) Flumorph (211867-47-9), (G-18) Iprovalicarb (140923-17-7), (G-19) Mandipropamid (374726-62-2), (G-20) Valiphenal (283159-94-4), (G-21) Polyoxins (11113-80-7), (G-22) Polyoxorim (22976-86-9), (G-23) Validamycin A (37248-47-8), (G-24) Biphenyl (92-52-4), (G-25) Chloroneb (2675-77-6), (G-26) Chlozolinate (84332-86-5), (G-27) Edifenfos (17109-49-8), (G-28) Etridiazole (2593-15-9), (G-29) Iodocarb (55406-53-6), (G-30) Iprobenfos (26087-47-8), (G-31) Iprodione (36734-19-7), (G-32) Isoprothiolane (50512-35-1), (G-33) Procymidone (32809-16-8), (G-34) Propamocarb (25606-41-1), (G-35) Propamocarb-hydrochlorid (25606-41-1), (G-36) Prothiocarb (19622-08-3), (G-37) Pyrazophos (13457-18-6), (G-38) Tolcofos-methyl (57018-04-9), (G-39) Vinclozolin (50471-44-8), (G-40) Carpropamid (104030-54-8), (G-41) Diclocymet (139920-32-4), (G-42) Fenoxanil (115852-48-7), (G-43) Phthalide (27355-22-2), (G-44) Pyroquilon (57369-32-1), (G-45) Tricyclazole (41814-78-2), (G-46) Benalaxyl (71626-11-4), (G-47) Benalaxyl-M (98243-83-5), (G-48) Bupirimate (41483-43-6), (G-49) Clozylacon (67932-85-8), (G-50) Dimethirimol (5221-53-4), (G-51) Ethirimol (23947-60-6), (G-52) Furalaxyl (57646-30-7), (G-53) Hymexazol (10004-44-1), (G-54) Metalaxyl (57837-19-1), (G-55) Metalaxyl-M (70630-17-0), (G-56) Ofurace (58810-48-3), (G-57) Oxadixyl (77732-09-3), (G-58) Oxolinic acid (14698-29-4), (G-59) Fenpiclonil (74738-17-3), (G-60) Fludioxonil (131341-86-1), (G-61) Quinoxyfen (124495-18-7), (G-62) Binapacryl (485-31-4), (G-63) Dinocap (131-72-6), (G-64) Fluazinam (79622-59-6), (G-65) Meptyldinocap (131-72-6), (G-66) Benthiazole (21564-17-0), (G-67) Bethoxazin (163269-30-5), (G-68) Capsimycin (70694-08-5), (G-69) Carvone (99-49-0), (G-70) Chinomethionat (2439-01-2), (G-71) Cufraneb (11096-18-7), (G-72) Cyflufenamid (180409-60-3), (G-73) Cymoxanil (57966-95-7), (G-74) Cyprosulfamide (221-667-31-8), (G-75) Dazomet (533-74-4), (G-76) Debacarb (62732-91-6), (G-77) Dichlorophen (97-23-4), (G-78) Diclomezine (62865-36-5), (G-79) Dicloran (99-30-9), (G-80) Difenzoquat (43222-48-6), (G-81) Diphenylamine (122-39-4), (G-82) Ferimzone (89269-64-7), (G-83) Flumetover (154025-04-4), (G-84) Fluoroimide (41205-21-4), (G-85) Flusulfamide (106917-52-6), (G-86) Fosetyl-Al (39148-24-8), (G-87) Fosetyl-Calcium, (G-88) Fosetyl-Natrium, (G-89) Hexachlorobenzene (118-74-1), (G-90) Irumamycin (81604-73-1), (G-91) Methasulfocarb (66952-49-6), (G-92) Methylisothiocyanate (556-61-6), (G-93) Metrafenone (220899-03-6), (G-94) Mildiomycin (67527-71-3), (G-95) Natamycin (7681-93-8), (G-96) Nickel dimethyldithiocarbamat, (G-97) Nitrothal-isopropyl (10552-74-6), (G-98) Octhilinone (26530-20-1), (G-99) Oxyfenthiin (34407-87-9), (G-100) Pentachlorphenol (87-86-5), (G-101) Phosphorige Säure (13598-36-2), (G-102) Propamocarb-Fosetyl, (G-103) Propanosin-Natrium (88498-02-6), (G-104) Proquinazid (189278-12-4), (G-105) Pyrrolnitrine (1018-71-9), (G-106) Quintozene (82-68-8), (G-107) Tecloftalam (76280-91-6), (G-108) Tecnazene (117-18-0), (G-109) Triazoxide (72459-58-6), (G-110) Trichlamide (70193-21-4), (G-111) Zarilamid (84527-51-5), (G-112) 8-Hydroxyquinolin-sulfat (134-31-6), (G-113) 2,3,5,6-Tetrachlor-4-(methylsulfonyl)pyridin (13108-52-6), (G-114) 3,4,5-Trichlorpyridine-2,6-dicarbonitril (17824-85-0), (G-115) 3-[5-(4-Chlorphenyl)-2,3-dimethylisoxazolidin-3-yl]pyridin, (G-116) N-(4-Chlor-2-nitrophenyl)-N-ethyl-4-methylbenzenesulfonamid (304911-98-6), (G-117) 2,3-Dibutyl-6-chlor-thieno[2,3-d]pyrimidin-4(3H)on (221451-58-7), (G-118) 2-Butoxy-6-iod-3-propyl-benzopyran-4-on, (G-119) N-(4-Chlorbenzyl)-3-[3-methoxy-4-(prop-2-yn-1-yloxy)phenyl]propanamid, (G-120) N-(6-Methoxy-3-pyridinyl)-cyclopropancarboxamid (112860-04-5), (G-121) N-[(4-Chlorphenyl)(cyano)methyl]-3-[3-methoxy-4-(prop-2-yn-1-yloxy)-phenyl]propanamid, (G-122) N-[(5-Brom-3-chlorpyridin-2-yl)methyl]-2,4-dichlorpyridin-3-carboxamid, (G-123) N-[1-(5-Brom-3-chlorpyridin-2-yl)ethyl]-2,4-dichlorpyridin-3-carboxamid, (G-124) N-[1-(5-Brom-3-chlorpyridin-2-yl)ethyl]-2-fluor-4-iodpyridin-3-carboxamid, (G-125) N'-[4-(3-tert-Butyl-4-chlorphenoxy)-2,5-dimethylphenyl]-N-ethyl-N-methylimidoformamid, (G-126) N'-[4-(3-tert-Butyl-4-chlorphenoxy)-2-methyl-5-(trifluormethyl)phenyl]-N-ethyl-N-methylimidoformamid, (G-127) N'-[4-(3-tert-Butyl-4-chlorphenoxy)-5-(difluormethyl)-2-methylphenyl]-N-ethyl-N-methylimidoformamid, (G-128) N'-[4-(3-tert-Butyl-4-fluorphenoxy)-2,5-dimethylphenyl]-N-ethyl-N-ethylimidoformamid, (G-129) N'-[4-(3-tert-Butyl-4-fluorphenoxy)-2-methyl-5-(trifluormethyl)phenyl]-N-ethyl-N-methylimidoformamid, (G-130) N'-[4-(3-tert-Butyl-4-fluorphenoxy)-5-(difluormethyl)-2-methylphenyl]-N-ethyl-N-methylimidoformamid, (G-131) N'-[4-(4-Chloro-3-isopropylphenoxy)-2,5-dimethylphenyl]-N-ethyl-N-methylimidoformamid, (G-132) N'-[4-(4-Chlor-3-isopropylphenoxy)-2-methyl-5-(trifluormethyl)phenyl]-N-ethyl-N-methylimidoformamid, (G-133) N'-[4-(4-Chlor-3-isopropylphenoxy)-5-(difluormethyl)-2-methylphenyl]-N-ethyl-N-methylimidoformamid, (G-134) N'-{4-[(3-tert-Butyl-1,2,4-thiadiazol-5-yl)oxy]-2,5-dimethylphenyl}-N-ethyl-N-methylimidoformamid, (G-135) N'-{4-[(3-tert-Butyl-1,2,4-thiadiazol-5-yl)oxy]-2-methyl-5-(trifluormethyl)phenyl}-N-ethyl-N-methylimidoformamid, (G-136) N'-{4-[(4-tert-Butyl-1,3-thiazol-2-yl)oxy]-2,5-dimethylphenyl}-N-ethyl-N-methylimidoformamid, (G-137) N'-{4-[(4-tert-Butyl-1,3-thiazol-2-yl)oxy]-2-methyl-5-(trifluormethyl)phenyl}-N-ethyl-N-methylimidoformamid, (G-138) N'-15-(Difluorinethyl)-2-methyl-4-[3-(trimethylsilyl)propoxy]phenyl}-N-ethyl-N-methylimidofortnamid, (G-139) N-Ethyl-N'-[4-(4-fluor-3-isopropylphenoxy)-2,5-dimethylphenyl]-N-ethylimidoformamid, (G-140) N-Ethyl-N'-[4-(4-fluor-3-isopropylphenoxy)-2-methyl-5-(trifluormethyl)phenyl]-N-methylimidoformamid, (G-141) N-Ethyl-N'-[4-(4-fluor-3-isopropylphenoxy)-2-methyl-5-(trifluormethyl)phenyl]-N-methylimidoformamid, (G-142) N-Ethyl-N'-{4-[(3-isopropyl-1,2,4-thiadiazol-5-yl)oxy]-2,5-dimethylphenyl}-N-methylimidoformamid, (G-143) N-Ethyl-N'-{4-[(3-isopropyl-1,2,4-thiadiazol-5-yl)oxy]-2-methyl-5-(trifluormethyl)phenyl}-N-methylimidoformamid, (G-144) N-Ethyl-N'-{4-[(4-isopropyl-1,3-thiazol-2-yl)oxy]-2,5-dimethylphenyl}-N-methylimidoformamid, (G-145) N-Ethyl-N'-{4-[(4-isopropyl-1,3-thiazol-2-yl)oxy]-2-methyl-5-(trifluormethyl)phenyl}-N-methylimidoformamid, (G-146) N-Ethyl-N-methyl-N'-{2-methyl-5-(trifluormethyl)-4-[3-(trimethylsilyl)propoxy]phenyl}imidoformamid, (G-147) S-Allyl5-amino-2-isopropyl-4-(2-methylphenyl)-3-oxo-2,3-dihydro-1H-pyrazole-1-carbothioat;

besonders bevorzugt ausgewählt aus (G-1) Acibenzolar-S-methyl, (G-46) Benalaxyl, (G-47) Benalaxyl-M, (G-15) Benthiavalicarb, (G-73) Cymoxanil, (G-7) Cyprodinil, (G-74) Cyprosulfamide, (G-16) Dimethomorph, (G-59) Fenpiclonil, (G-64) Fluazinam, (G-60) Fludioxonil, (G-86) Fosetyl-Al, (G-52) Furalaxyl, (G-31) Iprodione, (G-18) Iprovalicarb, (G-2) Isotianil, (G-19) Mandipropamid, (G-9) Mepanipyrim, (G-54) Metalaxyl, (G-55) Metalaxyl-M, (G-93) Metrafenone, (G-138) N'-{5-(Difluormethyl)-2-methyl-4-[3-(trimethylsilyl)propoxy]phenyl}-N-ethyl-N-methylimidoformamid, (G-146) N-Ethyl-N-methyl-N'-{2-methyl-5-(trifluormethyl)-4-[3-(trimethylsilyl)propoxy]phenyl}imidoformamid, (G-57) Oxadixyl, (G-101) Phosphorige Säure, (G-33) Procymidone, (G-34) Propamocarb, (G-35) Propamocarbhydrochlorid, (G-10) Pyrimethanil, (G-61) Quinoxyfen, (G-14) Silthiofam, (G-20) Valiphenal, (G-39) Vinclozolin.

Bevorzugt sind insbesondere die nachfolgend genannten Wirkstoffkombinationen bzw. Mittel, welche diese Wirkstoffkombinationen enthalten:

Poly-[2-(2-ethoxy-ethoxyethyl)-guanidinium-hydroxid] mit einer mittleren Molekularmasse von etwa 1000 (A-1) und wenigstens ein weiterer Wirkstoff ausgewählt aus der Reihe (B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Poly-[2-(2-ethoxy-ethoxyethyl)-guanidinium-hydroxid] mit einer mittleren Molekularmasse von etwa 1500 (A-2) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Poly-[2-(2-ethoxy-ethoxyethyl)-guanidinium-hydroxid] mit einer mittleren Molekularmasse von etwa 500 (A-3) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Poly-[2-(2-ethoxy-ethoxyethyl)-guanidinium-hydroxid] mit einer mittleren Molekularmasse von etwa 2000 (A-4) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Poly-[2-(2-ethoxy-ethoxyethyl)-guanidinium-hydroxid] mit einer mittleren Molekularmasse von etwa 2500 (A-5) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Poly-[2-(2-ethoxy-ethoxyethyl)-guanidinium-hydroxid] mit einer mittleren Molekularmasse von etwa 3000 (A-6) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Polykondensat aus Poly-(hexamethylen-guanidinium-hydroxid) und Poly-[2-(2-ethoxy)-ethoxyethyl)-guanidinium-hydroxid] im Molverhältnis 3:1 (A-7) und wenigstens ein weiterer Wirkstoff ausgewählt aus der Reihe(B-1), (B-2), (B-3), (B-4), (B-5), (B-6), (B-7), (B-8), (B-9), (B-10), (B-11), (B-12), (B-13), (B-14), (B-15), (B-16), (B-17), (B-18), (B-19), (B-20), (B-21), (B-22), (B-23), (B-24), (B-25), (B-26), (B-27), (B-28), (B-29), (B-30), (B-31), (B-32), (B-33), (B-34), (B-35), (B-36), (B-37), (B-38), (B-39), (B-40), (B-41), (B-42), (B-43), (B-44), (B-45), (B-46), (B-47), (B-48), (B-49), (B-50), (B-51), (C-1), (C-2), (C-3), (C-4), (C-5), (C-6), (C-7), (C-8), (C-9), (C-10), (C-11), (C-12), (C-13), (C-14), (C-15), (C-16), (C-17), (C-18), (C-19), (C-20), (C-21), (C-22), (C-23), (C-24), (C-25), (C-26), (C-27), (C-28), (C-29), (C-30), (C-31), (C-32), (C-33), (C-34), (C-35), (C-36), (C-37), (C-38), (C-39), (C-40), (D-1), (D-2), (D-3), (D-4), (D-5), (D-6), (D-7), (D-8), (D-9), (D-10), (D-11), (D-12), (D-13), (D-14), (D-15), (D-16), (D-17), (D-18), (D-19), (D-20), (D-21), (D-22), (E-1), (E-2), (E-3), (E-4), (E-5), (E-6), (E-7), (E-8), (E-9), (E-10), (E-11), (E-12), (E-13), (E-14), (F-1), (F-2), (F-3), (F-4), (F-5), (F-6), (F-7), (F-8), (F-9), (F-10), (F-11), (F-12), (F-13), (F-14), (F-15), (F-16), (F-17), (F-18), (F-19), (F-20), (F-21), (F-22), (F-23), (F-24), (F-25), (F-26), (F-27), (F-28), (F-29), (G-1), (G-2), (G-3), (G-4), (G-5), (G-6), (G-7), (G-8), (G-9), (G-10), (G-11), (G-12), (G-13), (G-14), (G-15), (G-16), (G-17), (G-18), (G-19), (G-20), (G-21), (G-22), (G-23), (G-24), (G-25), (G-26), (G-27), (G-28), (G-29), (G-30), (G-31), (G-32), (G-33), (G-34), (G-35), (G-36), (G-37), (G-38), (G-39), (G-40), (G-41), (G-42), (G-43), (G-44), (G-45), (G-46), (G-47), (G-48), (G-49), (G-50), (G-51), (G-52), (G-53), (G-54), (G-55), (G-56), (G-57), (G-58), (G-59), (G-60), (G-61), (G-62), (G-63), (G-64), (G-65), (G-66), (G-67), (G-68), (G-69), (G-70), (G-71), (G-72), (G-73), (G-74), (G-75), (G-76), (G-77), (G-78), (G-79), (G-80), (G-81), (G-82), (G-83), (G-84), (G-85), (G-86), (G-87), (G-88), (G-89), (G-90), (G-91), (G-92), (G-93), (G-94), (G-95), (G-96), (G-97), (G-98), (G-99), (G-100), (G-101), (G-102), (G-103), (G-104), (G-105), (G-106), (G-107), (G-108), (G-109), (G-110), (G-111), (G-112), (G-113), (G-114), (G-115), (G-116), (G-117), (G-118), (G-119), (G-120), (G-121), (G-122), (G-123), (G-124), (G-125), (G-126), (G-127), (G-128), (G-129), (G-130), (G-131), (G-132), (G-133), (G-134), (G-135), (G-136), (G-137), (G-138), (G-139), (G-140), (G-141), (G-142), (G-143), (G-144), (G-145), (G-146), (G-147).

Besonders bevorzugt sind die nachfolgend genannten Wirkstoffkombinationen bzw. Mittel, welche diese Wirkstoffkombinationen enthalten:

Poly-[2-(2-ethoxy-ethoxyethyl)-guanidinium-hydroxid] mit einer mittleren Molekularmasse von etwa 1000 (A-1) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Poly-[2-(2-ethoxy-ethoxyethyl)-guanidinium-hydroxid] mit einer mittleren Molekularmasse von etwa 1500 (A-2) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Poly-[2-(2-ethoxy-ethoxyethyl)-guanidinium-hydroxid] mit einer mittleren Molekularmasse von etwa 500 (A-3) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Poly-[2-(2-ethoxy-ethoxyethyl)-guanidinium-hydroxid] mit einer mittleren Molekularmasse von etwa 2000 (A-4) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Poly-[2-(2-ethoxy-ethoxyethyl)-guanidinium-hydroxid] mit einer mittleren Molekularmasse von etwa 2500 (A-5) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Poly-[2-(2-ethoxy-ethoxyethyl)-guanidinium-hydroxid] mit einer mittleren Molekularmasse von etwa 3000 (A-6) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Polykondensat aus Poly-(hexamethylen-guanidinium-hydroxid) und Poly-[2-(2-ethoxy)-ethoxyethyl)-guanidinium-hydroxid] im Molverhältnis 3:1 (A-7) und wenigstens ein weiterer Wirkstoff ausgewählt aus der Reihe (B-3), (B-5), (B-12), (B-17), (B-18), (B-19), (B-30), (B-40), (B-46), (B-47), (B-51), (C-2), (C-3), (C-4), (C-6), (C-12), (C-14), (C-15), (C-16), (C-17), (C-19), (C-25), (D-4), (D-6), (D-8), (D-9), (D-10), (D-11), (D-12), (D-13), (D-15), (E-2), (E-6), (E-8), (E-10), (E-11), (E-12), (E-13), (E-14), (F-4), (F-10), (F-12), (F-14), (F-15), (F-16), (F-17), (F-18), (F-20), (F-21), (F-22), (F-24), (F-26), (F-27), (F-28), (F-29), (G-1), (G-2), (G-7), (G-9), (G-10), (G-14), (G-15), (G-16), (G-18), (G-19), (G-20), (G-31), (G-33), (G-34), (G-35), (G-39), (G-46), (G-47), (G-52), (G-54), (G-55), (G-57), (G-59), (G-60), (G-61), (G-64), (G-73), (G-74), (G-86), (G-93), (G-101), (G-138), (G-146).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Im Allgemeinen entfallen auf 1 Gewichtsteil an Guanidium-Hydroxid (Komponente A) 0,01 - 100, bevorzugt 0,02 - 50, besonders bevorzugt 0,05 - 20, ganz besonders bevorzugt 0,01 - 10 Gewichtsteile an Wirkstoff ausgewählt aus den Gruppen (B), (C), (D), (E), (F) und (G). Außerdem können je Gewichtsteil an Guanidium-Hydroxid (Komponente A) 0,01 - 95; 0,11 - 90; 0,012 - 85; 0,0125 - 80; 0,013 - 75; 0,014 - 70; 0,015 - 65; 0,017 - 60; 0,018 - 55; 0,022 - 45; 0,025 - 40; 0,03- 35; 0,033 - 30; 0,04 - 25; 0,067 -15; 0,2 - 5; 0,25 - 4; 0,33 - 3; 0,5 - 2 Gewichtsteile an Wirkstoff ausgewählt aus den Gruppen (B), (C), (D), (E), (F) und (G) eingesetzt werden.

Erfindungsgemäß bedeutet der Ausdruck "Wirkstoffkombination" verschiedene mögliche Kombinationen der drei oben genannten Wirkstoffe, wie beispielsweise Fertigmischungen, Tankmischungen (worunter Applikations- und Spritzmischungen verstanden werden, die vor der Anwendung aus den Formulierungen der Einzelwirkstoffe durch Zusammengeben und Verdünnen hergestellt werden) oder Kombinationen hiervon (z.B. wird eine binäre Fertigmischung aus zwei der oben genannten Wirkstoffen mit einer Formulierung der dritten Einzelsubstanz in eine Tankmischung überführt). Erfindungsgemäß können die Einzelwirkstoffe auch sequentiell eingesetzt werden, d.h. einer nach dem anderen, und zwar mit einem vernünftigen zeitlichen Abstand von wenigen Stunden oder Tagen, bei Saatgutbehandlung z.B. auch durch Aufbringen mehrerer Schichten, die unterschiedliche Wirkstoffe enthalten. Vorzugsweise spielt es keine Rolle, in welcher Reihenfolge die einzelnen Wirkstoffe eingesetzt werden können.

Diese Erfindung betrifft weiterhin Mittel, welche die erfindungsgemäßen Wirkstoffkombinationen enthalten. Vorzugsweise handelt es sich um fungizide Mittel, enthaltend landwirtschaftlich verwendbare Trägerstoffe oder Streckmittel.

Erfindungsgemäß bedeutet Trägerstoff eine natürliche oder synthetische, organische oder anorganische Substanz, mit welchen die Wirkstoffe zur besseren Anwendbarkeit, v.a. zum Aufbringen auf Pflanzen oder Pflanzenteile oder Saatgut, gemischt oder verbunden sind. Der Trägerstoff, welcher fest oder flüssig sein kann, ist im Allgemeinen inert und sollte in der Landwirtschaft verwendbar sein.

Als feste Trägerstoffe kommen infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse, feste Düngemittel, Wasser Alkohole, besonders Butanol, organische Solventien, Mineral- und Pflanzenöle sowie Derivate hiervon. Mischungen solcher Trägerstoffe können ebenfalls verwendet werden. Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder Schaum erzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Als verflüssigte gasförmige Streckmittel oder Trägerstoffe kommen solche Flüssigkeiten infrage, welche bei normaler Temperatur und unter Normaldruck gasförmig sind, z.B. Aerosol-Treibgase, wie Butan, Propan, Stickstoff und Kohlendioxid.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Im Falle der Benutzung von Wasser als Streckmittel können z.B. auch organische Lösungsmittel als Hilfslösungsmittel verwendet werden. Als flüssige Lösungsmittel kommen im Wesentlichen infrage:
Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser.

Die erfindungsgemäßen Mittel können zusätzlich weitere Bestandteile enthalten, wie z.B. oberflächenaktive Stoffe. Als oberflächenaktive Stoffe kommen Emulgiermittel, Dispergiermittel oder Benetzungsmittel mit ionischen oder nicht-ionischen Eigenschaften oder Mischungen dieser oberflächenaktiven Stoffe infrage. Beispiele hierfür sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen, und Derivate der Verbindungen enthaltend Sulphate, Sulphonate und Phosphate. Die Anwesenheit einer oberflächenaktiven Substanz ist notwendig, wenn einer der Wirkstoff und/oder einer der inerten Trägerstoffe nicht in Wasser löslich ist und wenn die Anwendung in Wasser erfolgt. Der Anteil an oberflächenaktiven Stoffen liegt zwischen 5 und 40 Gewichtsprozent des erfindungsgemäßen Mittels.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Gegebenenfalls können auch andere zusätzliche Komponenten enthalten sein, z.B. schützende Kolloide, Bindemittel, Klebstoffe, Verdicker, thixotrope Stoffe, Penetrationsförderer, Stabilisatoren, Sequestiermittel, Komplexbildner. Im Allgemeinen können die Wirkstoffe mit jedem festen oder flüssigen Additiv, welches für Formulierungszwecke gewöhnlich verwendet wird, kombiniert werden.

Im Allgemeinen enthalten die erfindungsgemäßen Mittel zwischen 0,05 und 99 Gewichtsprozent von der erfindungsgemäßen Wirkstoffkombination, bevorzugt zwischen 10 und 70 Gewichtsprozent, besonders bevorzugt zwischen 20 und 50 Gewichtsprozent, hervorgehoben 25 Gewichtsprozent.

Die erfindungsgemäßen Wirkstoffkombinationen bzw. Mittel können als solche oder in Abhängigkeit von ihren jeweiligen physikalischen und/oder chemischen Eigenschaften in Form ihrer Formulierungen oder den daraus bereiteten Anwendungsformen, wie Aerosole, Kapselsuspensionen, Kaltnebelkonzentrate, Heißnebelkonzentrate, verkapselte Granulate, Feingranulate, fließfähige Konzentrate für die Behandlung von Saatgut, gebrauchsfertige Lösungen, ver-

stäubbare Pulver, emulgierbare Konzentrate, Öl-in-Wasser-Emulsionen, Wasser-in-Öl-Emulsionen, Makrogranulate, Mikrogranulate, Öl dispergierbare Pulver, Öl mischbare fließfähige Konzentrate, Öl mischbare Flüssigkeiten, Schäume, Pasten, Pestizid ummanteltes Saatgut, Suspensionskonzentrate, Suspensions-Emulsions-Konzentrate, lösliche Konzentrate, Suspensionen, Spritzpulver, lösliche Pulver, Stäubemittel und Granulate, wasserlösliche Granulate oder Tabletten, wasserlösliche Pulver für Saatgutbehandlung, benetzbare Pulver, Wirkstoff-imprägnierte Natur- und synthetische Stoffe sowie Feinstverkapselungen in polymeren Stoffen und in Hüllmassen für Saatgut, sowie ULV-Kalt- und Warmnebel-Formulierungen eingesetzt werden.

Die genannten Formulierungen können in an sich bekannter Weise hergestellt werden, z.B. durch Vermischen der Wirkstoffe bzw. der Wirkstoffkombinationen mit mindestens einem Zusatzstoff. Als Zusatzstoffe kommen alle üblichen Formulierhilfsmittel infrage, wie z. B. organische Solventien, Streckmittel, Lösungs- bzw. Verdünnungsmittel, feste Trägerstoffe und Füllstoffe, oberflächenaktive Substanzen (wie Adjuvantien, Emulgatoren, Dispergiermittel, Schutzkolloide, Netzmittel und Haftmittel), Dispergier- und/oder Binde- oder Fixiermittel, Konservierungsmittel, Farbstoffe und Pigmente, Entschäumer, anorganische und organische Verdicker, Wasser-Repellent, gegebenenfalls Sikkative und UV-Stabilisatoren, Gibberelline und auch Wasser sowie weiteren Verarbeitungshilfsmitteln. In Anhängigkeit von dem jeweils herzustellenden Formuliertyp sind weitere Verfahrensschritte wie z.B. Nassmahlung, Trockenmahlung oder Granulation nötig.

Als organische Verdünnungsmittel können alle üblicherweise für derartige Zwecke einsetzbaren polaren und unpolaren organischen Solventien vorhanden sein. Vorzugsweise in Betracht kommen Ketone, wie Methyl-isobutyl-keton und Cyclohexanon, ferner Amide, wie Dimethylformamid und Alkancarbonsäureamide wie Decansäure-dimethylamid und Octansäure-dimethylamid weiterhin cyclische Verbindungen, wie N-Methyl-pyrrolidon, N-Octyl-pyrrolidon, N-Dodecyl-pyrrolidon, N-Octylcaprolactam, N-Dodecyl-caprolactam und Butyrolacton, darüber hinaus stark polare Solventien, wie Dimethylsulfoxid, ferner aromatische Kohlenwasserstoffe, wie Xylol, Solvesso™, Mineralöle, wie Testbenzin, Petroleum, Alkylbenzole und Spindelöl, ausserdem Ester, wie Propylenglykol-monomethylether-acetat, Adipinsäure-dibutylester, Essigsäurehexylester, Essigsäure-heptylester, Zitronensäure-tri-n-butylester und Phthalsäure-di-n- butylester, und weiterhin Alkohole, wie z.B. Benzylalkohol und 1-Methoxy-2-propanol.

Als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln.

Als oberflächenative Substanzen (Adjuvantien, Emulgatoren, Dispergiermittel, Schutzkolloide, Netzmittel und Haftmittel) kommen übliche ionische und nichtionische Substanzen in Frage. Beispielhaft genannt seien ethoxylierte Nonylphenole, Polyalkylenglykolether von linearen oder verzweigten Alkoholen, Umsetzungsprodukte von Alkylphenolen mit Ethylenoxid und/oder Propylenoxid, Umsetzungsprodukte von Fettaminen mit Ethylenoxid und/oder Propylenoxid weiterhin Fettsäureester, Alkylsulfonate, Alkylsulfate, Alkylethersulfate, Alkyletherphosphate, Arylsulfate, ethoxylierte Arylalkylphenole, wie z.B. Tristyryl-phenol-ethoxylate, weiterhin ethoxylierte und propoxylierte Arylalkylphenole sowie sulfatierte oder phosphatierte Arylalkylphenol-ethoxylate bzw. -ethoxy- und -propoxylate. Weiterhin genannt seien natürliche und synthetische, wasserlösliche Polymere, wie Ligninsulfonate, Gelatine, Gummiarabicum, Phospholipide, Stärke, hydophob modifizierte Stärke und Cellulosederivate, insbesondere Celluloseester und Celluloseether, ferner Polyvinylalkohol, Polyvinylacetat, Polyvinylpyrrolidon, Polyacrylsäure, Polymethacrylsäure und Co-Polymerisate aus (Meth)acrylsäure und (Meth)acrylsäureestern, und ausserdem auch mit Alkalimetallhydroxid neutralisierte Co-Polymerisate aus Methacrylsäure und Methacrylsäureester und Kondensationsprodukte von gegebenenfalls substituierten Naphthalinsulfonsäuresalzen mit Formaldehyd.

Als feste Füll- und Trägerstoffe kommen alle üblicherweise für diesen Zweck in Pflanzenschutzmitteln eingesetzten Substanzen in Frage. Vorzugsweise genannt seien anorganische Partikel, wie Carbonate, Silikate, Sulfate und Oxide mit einer mittleren Teilchengröße von 0,005 bis 20 μm, besonders bevorzugt von 0,02 bis 10 μm. Beispielhaft erwähnt seien Ammoniumsulfat, Ammoniumphosphat, Harnstoff, Calciumcarbonat, Calciumsulfat, Magnesiumsulfat, Magnesiumoxid, Aluminiumoxid, Siliziumdioxid, so genannte hochdisperse Kieselsäure, Kieselgele, natürliche und synthetische Silikate und Alumosilikate und pflanzliche Produkte wie Getreidemehl, Holzpulver und Cellulosepulver.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe. Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer, Magnesiumstearat, Silikonemulsionen, langkettige Alkohole, Fettsäuren und deren Salze sowie fluororganische Verbindungen und deren Gemische.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Polysaccharide wie Xanthan Gum oder Veegum, modifizierte Tone, Schichtsilikate wie Attapulgit und Bentonit sowie hochdisperse Kieselsäuren genannt.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die Formulierungen enthalten im Allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Auch eine Mischung mit Düngemitteln ist möglich.

Die erfindungsgemäße Behandlung der Pflanzen und Pflanzenteile mit den Wirkstoffkombinationen bzw. Mitteln erfolgt direkt oder durch Einwirkung auf deren Umgebung, Lebensraum oder Lagerraum nach den üblichen Behandlungsmethoden, z.B. durch Tauchen, (Ver-)Spritzen, (Ver-)Sprühen, Berieseln, Verdampfen, Zerstäuben, Vernebeln, (Ver-)Streuen, Verschäumen, Bestreichen, Verstreichen, Gießen (drenchen), Tröpfchenbewässerung und bei Vermehrungsmaterial, insbesondere bei Samen, weiterhin durch Trockenbeizen, Nassbeizen, Schlämmbeizen, Inkrustieren, ein- oder mehrschichtiges Umhüllen usw.

Die Anwendung der Formulierungen erfolgt gemäß der üblichen landwirtschaftlichen Praxis in einer den Anwendungsformen angepassten Weise. Übliche Anwendungen sind z.B. Verdünnung in Wasser und Ausspritzen der resultierenden Spritzbrühe, Anwendung nach Verdünnung in Öl, direkte Anwendung ohne Verdünnung, Saatgutbeizung oder Bodenapplikation von Trägergranulaten.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 2 Gew.-% liegen.

Die erfindungsgemäßen Mittel umfassen nicht nur Mittel, welche bereits anwendungsfertig sind und mit einer geeigneten Apparatur auf die Pflanze oder das Saatgut ausgebracht werden können, sondern kommerzielle Konzentrate, welche vor Gebrauch mit Wasser verdünnt werden müssen.

Die erfindungsgemäßen Wirkstoffkombinationen bzw. Mittel weisen eine starke mikrobizide Wirkung auf und können zur Bekämpfung von unerwünschten Mikroorganismen, wie Pilzen und Bakterien, im Pflanzenschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Die erfindungsgemäßen fungiziden Mittel können zur Bekämpfung von phytopathogenen Pilzen kurativ oder protektiv eingesetzt werden. Die Erfindung betrifft daher auch kurative und protektive Verfahren zum Bekämpfen von phytopathogenen Pilzen durch die Verwendung der erfindungsgemäßen Wirkstoffkombinationen oder Mittel, welche auf das Saatgut, die Pflanze oder Pflanzenteile, die Früchten oder den Boden, in welcher die Pflanzen wachsen, ausgebracht wird.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Als Pflanzen, welche erfindungsgemäß behandelt werden können, seien folgende erwähnt: Baumwolle, Flachs, Weinrebe, Obst, Gemüse, wie *Rosaceae sp.* (beispielsweise Kernfrüchte wie Apfel und Birne, aber auch Steinfrüchte wie Aprikosen, Kirschen, Mandeln und Pfirsiche und Beerenfrüchte wie Erdbeeren), *Ribesioidae sp. , Juglandaceae sp. , Betulaceae sp. , Anacardiaceae sp. , Fagaceae sp. , Moraceae sp., Oleaceae sp., Actinidaceae sp. , Lauraceae sp.*, *Musaceae sp.* (beispielsweise Bananenbäume und - plantagen), *Rubiaceae sp.* (beispielsweise Kaffee), *Theaceae sp.*, *Sterculiceae sp., Rutaceae sp.* (beispielsweise Zitronen, Organen und Grapefruit); *Solanaceae sp.* (beispielsweise Tomaten), *Liliaceae sp., Asteraceae sp.* (beispielsweise Salat), *Umbelliferae sp., Cruciferae sp., Chenopodiaceae sp., Cucurbitaceae sp.* (beispielsweise Gurke), *Alliaceae sp.* (beispielsweise Lauch, Zwiebel), *Papilionaceae sp.* (beispielsweise Erbsen); Hauptnutzpflanzen, wie *Gramineae sp.* (beispielsweise Mais, Rasen, Getreide wie Weizen, Roggen, Reis, Gerste, Hafer, Hirse und Triticale), *Asteraceae sp.* (beispielsweise Sonnenblume), *Brassicaceae sp.* (beispielsweise Weißkohl, Rotkohl, Brokkoli, Blumenkohl, Rosenkohl, Pak Choi, Kohlrabi, Radieschen sowie Raps, Senf, Meerrettich und Kresse), *Fabacae sp.* (beispielsweise Bohne, Erdnüsse), *Papilionaceae sp.* (beispielsweise Sojabohne), *Solanaceae sp.* (beispielsweise Kartoffeln), *Chenopodiaceae sp.* (beispielsweise Zuckerrübe, Futterrübe, Mangold, Rote Rübe); Nutzpflanzen und Zierpflanzen in Garten und Wald; sowie jeweils genetisch modifizierte Arten dieser Pflanzen. Bevorzugt werden Getreidepflanzen erfindungsgemäß behandelt.

Das erfindungsgemäße Verfahren zum Bekämpfen von phytopathogenen Pilzen kann auch zur Behandlung von genetisch veränderten Organismen, z.B. Pflanzen oder Samen, verwendet werden. Genetisch veränderte Pflanzen sind solche, in deren Genom ein bestimmtes heterologes Gen, welches für ein bestimmtes Protein codiert, stabil integriert wurde. "Heterologes Gen" meint dabei ein Gen, welches der transformierten Pflanze neue agronomische Eigenschaften verleiht, oder ein Gen, welches die agronomische Qualität der modifizierten Pflanze verbessert.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert. Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfmdungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Das erfindungsgemäße Verfahren zum Bekämpfen von unerwünschten Pilzen kann auch zum Schutz von so genannte Storage Goods verwendet werden. Unter "Storage Goods" werden dabei natürliche Substanzen pflanzlichen oder tierischen Ursprungs oder deren Verarbeitungsprodukte, welche der Natur entnommen wurden und für die Langzeitschutz gewünscht ist, verstanden. Storage Goods pflanzlichen Ursprungs, wie z.B. Pflanzen oder Pflanzenteile, wie Stiele, Blätter, Knollen, Samen, Früchte, Körner, können in frisch geerntetem Zustand oder nach Verarbeitung durch (Vor-)Trocknen, Befeuchten, Zerkleinern, Mahlen, Pressen oder Rösten, geschützt werden. Storage Goods umfasst auch Nutzholz, sei es unverarbeitet, wie Bauholz, Stromleitungsmasten und Schranken, oder in Form fertiger Produkte, wie Möbel. Storage Goods tierischen Ursprungs sind beispielsweise Felle, Leder, Pelze und Haare. Die erfindungsgemäßen Wirkstoffkombinationen können nachteilige Effekte wie Vermodern, Verfall, Ver-, Entfärbung oder Verschimmeln verhindern.

Eine weitere Anwendung der erfindungsgemäßen Wirkstoffkombinationen und Mittel ist der Schutz von Holz und Holzwerkstoffen. Die zum Schutz von Holz und Holzwerkstoffen verwendeten insektiziden und fungiziden Mittel oder Konzentrate enthalten den erfindungsgemäßen Wirkstoff in einer Konzentration von 0,0001 bis 95 Gew.-%, insbesondere 0,001 bis 60 Gew.-%.

Zugleich können die erfindungsgemäßen Wirkstoffkombinationen und Mittel zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden. Beispielhaft, aber nicht begrenzend, seien einige Erreger von pilzlichen Erkrankungen, die erfindungsgemäß behandelt werden können, genannt:

Erkrankungen, hervorgerufen durch Erreger des Echten Mehltaus wie z.B. Blumeria-Arten, wie beispielsweise Blumeria graminis; Podosphaera-Arten, wie beispielsweise Podosphaera leucotricha; Sphaerotheca-Arten, wie beispielsweise Sphaerotheca fuliginea; Uncinula-Arten, wie beispielsweise Uncinula necator;

Erkrankungen, hervorgerufen durch Erreger von Rostkrankheiten wie z.B. Gymnosporangium-Arten, wie beispielsweise Gymnosporangium sabinae; Hemileia-Arten, wie beispielsweise Hemileia vastatrix; Phakopsora-Arten, wie beispielsweise Phakopsora pachyrhizi und Phakopsora meibomiae; Puccinia-Arten, wie beispielsweise Puccinia recondita oder Puccinia triticina; Uromyces-Arten, wie beispielsweise Uromyces appendiculatus;

Erkrankungen, hervorgerufen durch Erreger der Gruppe der Oomyceten wie z.B. Bremia-Arten, wie beispielsweise Bremia lactucae; Peronospora-Arten, wie beispielsweise Peronospora pisi oder P. brassicae; Phytophthora-Arten, wie beispielsweise Phytophthora infestans; Plasmopara-Arten, wie beispielsweise Plasmopara viticola; Pseudoperonospora-Arten, wie beispielsweise Pseudoperonospora humuli oder Pseudoperonospora cubensis; Pythium-Arten, wie beispielsweise Pythium ultimum;

Blattfleckenkrankheiten und Blattwelken, hervorgerufen durch z.B. Alternaria-Arten, wie beispielsweise Alternaria solani; Cercospora-Arten, wie beispielsweise Cercospora beticola; Cladiosporum-Arten, wie beispielsweise Cladiosporium cucumerinum; Cochliobolus-Arten, wie beispielsweise Cochliobolus sativus (Konidienform: Drechslera, Syn: Helminthosporium); Colletotrichum-Arten, wie beispielsweise Colletotrichum lindemuthanium; Cycloconium-Arten, wie beispielsweise Cycloconium oleaginum; Diaporthe-Arten, wie beispielsweise Diaporthe citri; Elsinoe-Arten, wie beispielsweise Elsinoe fawcettii; Gloeosporium-Arten, wie beispielsweise Gloeosporium laeticolor; Glomerella-Arten, wie beispielsweise Glomerella cingulata; Guignardia-Arten, wie beispielsweise Guignardia bidwelli; Leptosphaeria-Arten, wie beispielsweise Leptosphaeria maculans; Magnaporthe-Arten, wie beispielsweise Magnaporthe grisea; Microdochium-Arten, wie beispielsweise Microdochium nivale; Mycosphaerella-Arten, wie beispielsweise Mycosphaerella graminicola und M. fijiensis; Phaeosphaeria-Arten, wie beispielsweise Phaeosphaeria nodorum; Pyrenophora-Arten, wie beispielsweise Pyrenophora teres; Ramularia-Arten, wie beispielsweise Ramularia collo-cygni; Rhynchosporium-Arten, wie beispielsweise Rhynchosporium secalis; Septoria-Arten, wie beispielsweise Septoria apii; Typhula-Arten, wie beispielsweise Typhula incarnata; Venturia-Arten, wie beispielsweise Venturia inaequalis;

Wurzel- und Stängelkrankheiten, hervorgerufen durch z.B. Corticium-Arten, wie beispielsweise Corticium graminearum; Fusarium-Arten, wie beispielsweise Fusarium oxysporum; Gaeumannomyces-Arten, wie beispielsweise Gaeumannomyces graminis; Rhizoctonia-Arten, wie beispielsweise Rhizoctonia solani; Tapesia-Arten, wie beispielsweise Tapesia acuformis; Thielaviopsis-Arten, wie beispielsweise Thielaviopsis basicola;

Ähren- und Rispenerkrankungen (inklusive Maiskolben), hervorgerufen durch z.B. Alternaria-Arten, wie beispielsweise Alternaria spp.; Aspergillus-Arten, wie beispielsweise Aspergillus flavus; Cladosporium-Arten, wie beispielsweise Cladosporium cladosporioides; Claviceps-Arten, wie beispielsweise Claviceps purpurea; Fusarium-Arten, wie beispielsweise Fusarium culmorum; Gibberella-Arten, wie beispielsweise Gibberella zeae; Monographella-Arten, wie beispielsweise Monographella nivalis; Septoria-Arten, wie beispielsweise Septoria nodorum;

Erkrankungen, hervorgerufen durch Brandpilze wie z.B. Sphacelotheca-Arten, wie beispielsweise Sphacelotheca reiliana; Tilletia-Arten, wie beispielsweise Tilletia caries, T. controversa; Urocystis-Arten, wie beispielsweise Urocystis occulta; Ustilago-Arten, wie beispielsweise Ustilago nuda, U. nuda tritici;

Fruchtfäule hervorgerufen durch z.B. Aspergillus-Arten, wie beispielsweise Aspergillus flavus; Botrytis-Arten, wie beispielsweise Botrytis cinerea; Penicillium-Arten, wie beispielsweise Penicillium expansum und P. purpurogenum; Sclerotinia-Arten, wie beispielsweise Sclerotinia sclerotiorum; Verticilium-Arten, wie beispielsweise Verticilium alboatrum;

Samen- und bodenbürtige Fäulen und Welken, sowie Sämlingserkrankungen, hervorgerufen durch z.B. Fusarium-Arten, wie beispielsweise Fusarium culmorum; Phytophthora Arten, wie beispielsweise Phytophthora cactorum; Pythium-Arten, wie beispielsweise Pythium ultimum; Rhizoctonia-Arten, wie beispielsweise Rhizoctonia solani; Sclerotium-Arten, wie beispielsweise Sclerotium rolfsii;

Krebserkrankungen, Gallen und Hexenbesen, hervorgerufen durch z.B. Nectria-Arten, wie beispielsweise Nectria galligena;

Welkeerkrankungen hervorgerufen durch z.B. Monilinia-Arten, wie beispielsweise Monilinia laxa;

Deformationen von Blättern, Blüten und Früchten, hervorgerufen durch z.B. Taphrina-Arten, wie beispielsweise Taphrina deformans;

Degenerationserkrankungen holziger Pflanzen, hervorgerufen durch z.B. Esca-Arten, wie beispielsweise Phaemoniella clamydospora und Phaeoacremonium aleophilum und Fomitiporia mediterranea;

Blüten- und Samenerkrankungen, hervorgerufen durch z.B. Botrytis-Arten, wie beispielsweise Botrytis cinerea;

Erkrankungen von Pflanzenknollen, hervorgerufen durch z.B. Rhizoctonia-Arten, wie beispielsweise Rhizoctonia solani; Helminthosporium-Arten, wie beispielsweise Helminthosporium solani;

Erkrankungen, hervorgerufen durch bakterielle Erreger wie z.B. Xanthomonas-Arten, wie beispielsweise Xanthomonas campestris pv. oryzae; Pseudomonas-Arten, wie beispielsweise Pseudomonas syringae pv. lachrymans; Erwinia-Arten, wie beispielsweise Erwinia amylovora;

Bevorzugt können die folgenden Krankheiten von Soja-Bohnen bekämpft werden:

Pilzkrankheiten an Blättern, Stängeln, Schoten und Samen verursacht durch z.B. Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Pod and Stem Blight (Phomopsis sojae), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi, Phakopsora meibomiae), Scab (Sphaceloma glycines), Stemphylium Leaf Blight (Stemphylium botryosum), Target Spot (Corynespora cassücola).

Pilzkrankheiten an Wurzeln und der Stängelbasis verursacht durch z.B. Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Besonders bevorzugt lassen sich folgende pilzliche und bakterielle Pflanzenkrankheiten bekämpfen: Dürrfleckenkrankheit *(Alternaria solani),* Grauschimmel *(Botryis cinerea),* Kraut- und Braun- bzw. Knollenfäule *(Phytophthora infestans),* falscher Mehltau *(Plasmopara viticola),* Apfelschorf *(Venturia inaequalis),* Fusariosen (ausgelöst z.B. durch *Fusarium culmorum* und *Fusarium graminearum),* Blattdürre *(Septoria tritici*), Schneeschimmel *(Microdochium nivale)* und Feuerbrand *(Erwinia amylovora)* bekämpfen.

Es ist auch möglich, resistente Stämme der vorgenannten Organismen zu bekämpfen.

Die Aufwandmenge der erfindungsgemäßen Wirkstoffkombinationen beträgt

- bei der Behandlung von Blättern: von 0,1 bis 10 000 g/ha, bevorzugt von 10 bis 1 000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden);
- bei der Saatgutbehandlung: von 2 bis 200 g pro 100 kg Saatgut, bevorzugt von 3 bis 150 g pro 100 kg Saatgut, besonders bevorzugt von 2,5 bis 25 g pro 100 kg Saatgut, ganz besonders bevorzugt von 2,5 bis 12,5 g pro 100 kg Saatgut;
- bei der Bodenbehandlung: von 0,1 bis 10 000 g/ha, bevorzugt von 1 bis 5 000 g/ha.

Diese Aufwandmengen seien nur beispielhaft und nicht limitierend im Sinne der Erfindung genannt.

Die erfindungsgemäßen Wirkstoffkombinationen bzw. Mittel können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im Allgemeinen auf 1 bis 28 Tage, vorzugsweise 1 bis 14 Tage nach der Behandlung der Pflanzen mit den Wirkstoffen bzw. auf bis zu 200 Tage nach einer Saatgutbehandlung.

Darüber hinaus kann durch die erfindungsgemäße Behandlung der Mykotoxingehalt im Erntegut und den daraus hergestellten Nahrungs- und Futtermitteln verringert werden. Besonders, aber nicht ausschließlich sind hierbei folgende Mykotoxine zu nennen: Deoxynivalenol (DON), Nivalenol, 15-Ac-DON, 3-Ac-DON, T2- und HT2- Toxin, Fumonisine, Zearalenon, Moniliformin, Fusarin, Diaceotoxyscirpenol (DAS), Beauvericin, Enniatin, Fusaroproliferin, Fusarenol, Ochratoxine, Patulin, Mutterkornalkaloide und Aflatoxine, die beispielsweise von den folgenden Pilzen verursacht werden können: Fusarium spec., wie Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides u.a. sowie auch von Aspergillus spec., Penicillium spec., Claviceps purpurea, Stachybotrys spec. u.a.

Die Erfindung umfasst weiterhin ein Verfahren zur Behandlung von Saatgut, wobei die einzelnen Wirkstoffe gleichzeitig auf das Saatgut aufgebracht werden. Außerdem umfasst die Erfindung ein Verfahren zur Behandlung von Saatgut, wobei die einzelnen Wirkstoffe jeweils nacheinander auf dem Saatgut aufgebracht werden. Außerdem umfasst die Erfindung ein Verfahren zur Behandlung von Saatgut, wobei zunächst ein einzelner Wirkstoff gefolgt von einer binären Mischung der beiden anderen Wirkstoffe aufgebracht wird. Alternativ kann auch zuerst eine binäre Mischung gefolgt von dem verbleibenden Einzelwirkstoff auf dem Saatgut aufgebracht werden. Bei separatem Auftragen von Wirkstoffen und/oder Einzelwirkstoffen und binären Mischungen erfolgt dieses vorzugsweise in verschiedenen Schichten. Diese Schichten können zusätzlich durch Schichten ohne Wirkstoff getrennt sein.

Die Erfindung betrifft weiterhin Saatgut, welches gemäß einem der im vorherigen Absatz beschriebenen Verfahren behandelt wurde.

Die erfindungsgemäßen Wirkstoffkombinationen bzw. Mittel sind speziell geeignet für die Behandlung von Saatgut. Ein großer Teil des durch Schadorganismen hervorgerufenen Schadens an Kulturpflanzen wird durch den Befall des Saatguts während der Lagerung oder nach der Aussaat sowie während und nach der Keimung der Pflanze ausgelöst. Diese Phase ist besonders kritisch, weil die Wurzeln und Schösslinge der wachsenden Pflanze besonders empfindlich sind und auch nur eine kleine Schädigung zum Tod der Pflanze führen kann. Es besteht daher ein großes Interesse daran, das Saatgut und die keimende Pflanze durch Einsatz geeigneter Mittel zu schützen.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird. Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen. Weiterhin bezieht sich die Erfindung auf Saatgut, welches zum Schutz vor phytopathogenen Pilzen mit einem erfindungsgemäßen Mittel behandelt wurde.

Die Bekämpfung von phytopathogenen Pilzen, die Pflanzen nach dem Auflaufen schädigen, erfolgt in erster Linie durch die Behandlung des Bodens und der oberirdischen Pflanzenteile mit Pflanzenschutzmitteln. Aufgrund der Bedenken hinsichtlich eines möglichen Einflusses der Pflanzenschutzmittel auf die Umwelt und die Gesundheit von Menschen und Tieren gibt es Anstrengungen, die Menge der ausgebrachten Wirkstoffe zu vermindern.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können, wobei die aus diesem Saatgut wachsende Pflanze in der Lage ist, ein Protein zu exprimieren, welches gegen Schädlinge wirkt. Durch die Behandlung solchen Saatguts mit den erfindungsgemäßen Wirkstoffkombinationen bzw. Mitteln können bereits durch die Expression des beispielsweise insektiziden Proteins bestimmte Schädlinge bekämpft werden. Überraschenderweise kann dabei ein weitere synergistischer Effekt beobachtet werden, welcher zusätzlich die Effektivität zum Schutz gegen den Schädlingsbefall vergrößert.

Die erfindungsgemäßen Mittel eignen sich zum Schutz von Saatgut jeglicher Pflanzensorte, die in der Landwirtschaft, im Gewächshaus, in Forsten oder im Garten- und Weinbau eingesetzt wird. Insbesondere handelt es sich dabei um Saatgut von Mais, Erdnuss, Raps, Mohn, Olive, Kokosnuss, Kakao, Soja, Rübe (z.B. Zuckerrübe und Futterrübe), Reis, Hirse, Weizen, Gerste, Roggen, Triticale, Hafer, Baumwolle, Kartoffeln, Sonnenblume, Zuckerrohr, Tabak, Bohne, Kaffee, Gemüse (wie Tomate, Gurke, Zwiebeln und Salat), Rasen und Zierpflanzen (siehe auch oben).

Wie schon beschrieben, ist die Behandlung von transgenem Saatgut mit den erfindungsgemäßen Wirkstoffkombinationen bzw. Mitteln von besonderer Bedeutung. Dies betrifft das Saatgut von Pflanzen, die wenigstens ein heterologes Gen enthalten, das die Expression eines Polypeptids oder Proteins mit insektiziden Eigenschaften ermöglicht. Das heterologe Gen in transgenem Saatgut kann z.B. aus Mikroorganismen der Arten Bacillus, Rhizobium, Pseudomonas, Serratia, Trichoderma, Clavibacter, Glomus or Gliocladium stammen. Bevorzugt stammt dieses heterologe Gen aus Bacillus sp., wobei das Genprodukt eine Wirkung gegen den Maiszünsler (European corn borer) und/oder Western Corn Rootworm besitzt. Besonders bevorzugt stammt das heterologe Gen aus Bacillus thuringiensis.

Im Rahmen der vorliegenden Erfindung werden die erfindungsgemäßen Wirkstoffkombinationen bzw. Mittel alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Gemäß einem weiteren Aspekt der vorliegenden Erfindung wird in den erfindungsgemäßen Wirkstoffkombinationen bzw. Mitteln das Verhältnis der drei Komponenten vorzugsweise so gewählt, dass ein synergistischer Effekt erhalten wird. Hierbei wird "synergistischer Effekt" beispielsweise so verstanden wie von Colby in dem Artikel "Calculation of the synergistic and antagonistic responses of herbicide combinations" (in Weeds, 1967, 15, 20-22) beschrieben wurde.

Nach Colby liegt ein synergistischer (überadditiver) Effekt vor, wenn die tatsächliche fungizide Wirkung größer als berechnet ist. In diesem Fall muss der tatsächlich beobachtete Wirkungsgrad größer sein als der aus der im Folgenden angeführten Formel errechnete Wert für den erwarteten Wirkungsgrad (E).

Wenn

X      den Wirkungsgrad beim Einsatz des Wirkstoffes A in einer Aufwandmenge von $\underline{m}$ g/ha bedeutet,

Y      den Wirkungsgrad beim Einsatz des Wirkstoffes B in einer Aufwandmenge von $\underline{n}$ g/ha bedeutet,

Z      den Wirkungsgrad beim Einsatz des Wirkstoffes C in einer Aufwandmenge von $\underline{r}$ g/ha bedeutet,

$E_1$      den Wirkungsgrad beim Einsatz der Wirkstoffe A und B in Aufwandmengen von $\underline{m}$ und $\underline{n}$ g/ha bedeutet und

$E_2$      den Wirkungsgrad beim Einsatz der Wirkstoffe A und B und C in Aufwandmengen von $\underline{m}$ und $\underline{n}$ und $\underline{r}$ g/ha bedeutet,

dann ist für eine Kombination aus 2 Wirkstoffen:

$$E_1 = X + Y - \frac{X \cdot Y}{100}$$

und für eine Kombination aus 3 Wirkstoffen:

$$E_2 = X + Y + Z - \left( \frac{X \cdot Y + X \cdot Z + Y \cdot Z}{100} \right) + \frac{X \cdot Y \cdot Z}{10000}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Eine weitere Möglichkeit, einen synergistischen Effekt zu belegen, stellt die Methode von Tammes dar (vgl. "Isoboles, a graphic representation of synergism in pesticides" in Neth. J. Plant Path., 1964, 70, 73-80).

Die Erfindung wird durch die folgenden Beispiele veranschaulicht. Die Erfindung ist jedoch nicht auf die Beispiele limitiert.

**Anwendungsbeispiele**

Beispiel A: *Alternaria*-Test (Tomate) / protektiv

Zur Prüfung auf protektive Wirksamkeit bespritzt man junge Tomatenpflanzen mit der Wirkstoffzubereitung in wässeriger Lösung in der angegebenen Aufwandmenge. 1 Tag nach der Behandlung werden die Pflanzen mit einer Sporensuspension von *Alternaria solani* inokuliert und stehen dann 24 h bei 100 % relativer Feuchte und 20°C. Anschließend stehen die Pflanzen bei 96 % relativer Luftfeuchtigkeit und einer Temperatur von 20°C. 7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle A: *Alternaria*-Test (Tomate) / protektiv

| Wirkstoff | Aufwandmenge an Wirkstoff in ppm | Wirkungsgrad in % |
|-----------|----------------------------------|-------------------|
| (A-7)     | 2000                             | 95                |

Beispiel B: *Botrytis-Test* (Gurke) / protektiv

Zur Prüfung auf protektive Wirksamkeit bespritzt man junge Gurkenpflanzen mit der Wirkstoffzubereitung in wässeriger Lösung in der angegebenen Aufwandmenge. 1 Tag nach der Behandlung werden die Pflanzen mit einer Sporensuspension von *Botryis cinerea* inokuliert und stehen dann 48 h bei 100 % relativer Feuchte und 22°C. Anschließend stehen die Pflanzen bei 96 % relativer Luftfeuchtigkeit und einer Temperatur von 14°C. 5-6 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle B: *Botrytis-Test* (Gurke) / protektiv

| Wirkstoff | Aufwandmenge an Wirkstoff in ppm | Wirkungsgrad in % |
|-----------|----------------------------------|-------------------|
| (A-7)     | 2000                             | 100               |

Beispiel C: *Phytophthora-Test* (Tomate) / protektiv

Zur Prüfung auf protektive Wirksamkeit werden junge Tomatenpflanzen mit der Wirkstoffzubereitung in wässeriger Lösung in der angegebenen Aufwandmenge besprüht. 1 Tag nach der Behandlung werden die Pflanzen mit einer Sporensuspension von *Phytophthora infestans* inokuliert und stehen dann 24 h bei 100 % relativer Feuchte und 20°C. Anschließend werden die Pflanzen in einer Klimazelle bei ca. 96 % relativer Luftfeuchtigkeit und einer Temperatur von ca. 20°C aufgestellt. 7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle C: *Phytophthora*-Test (Tomate) / protektiv

| Wirkstoff | Aufwandmenge an Wirkstoff in ppm | Wirkungsgrad in % |
|-----------|----------------------------------|-------------------|
| (A-7) | 2000 | 90 |

Beispiel D: *Plasmopara-Test* **(Rebe) / protektiv**

Zur Prüfung auf protektive Wirksamkeit werden junge Pflanzen mit der Wirkstoffzubereitung in wässeriger Lösung in der angegebenen Aufwandmenge besprüht. Nach Antrocknen des Spritzbelages werden die Pflanzen mit einer wässrigen Sporensuspension von *Plasmopara viticola* inokuliert und verbleiben dann 1 Tag in einer Inkubationskabine bei ca. 20°C und 100 % relativer Luftfeuchtigkeit. Anschließend werden die Pflanzen 4 Tage im Gewächshaus bei ca. 21°C und ca. 90 % Luftfeuchtigkeit aufgestellt. Die Pflanzen werden dann angefeuchtet und 1 Tag in eine Inkubationskabine gestellt. 6 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle D: *Plasmopara-Test* (Rebe) / protektiv

| Wirkstoff | Aufwandmenge an Wirkstoff in ppm | Wirkungsgrad in % |
|-----------|----------------------------------|-------------------|
| (A-7) | 2000 | 95 |

Beispiel E: *Venturia*-Test (Apfel) / protektiv

Zur Prüfung auf protektive Wirksamkeit werden junge Pflanzen mit der Wirkstoffzubereitung in wässeriger Lösung in der angegebenen Aufwandmenge besprüht. Nach Antrocknen des Spritzbelages werden die Pflanzen mit einer wässrigen Konidiensuspension des Apfelschorferregers *Venturia inaequalis* inokuliert und verbleiben dann 1 Tag bei ca. 20°C und 100 % relativer Luftfeuchtigkeit in einer Inkubationskabine. Die Pflanzen werden dann im Gewächshaus bei ca. 21°C und einer relativen Luftfeuchtigkeit von ca. 90 % aufgestellt. 10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle E: *Venturia*-Test (Apfel) / protektiv

| Wirkstoff | Aufwandmenge an Wirkstoff in ppm | Wirkungsgrad in % |
|-----------|----------------------------------|-------------------|
| (A-7) | 2000 | 98 |

Beispiel F: *Fusarium culmorum-Test* **(Weizen) / protektiv**

Zur Prüfung auf protektive Wirksamkeit werden junge Pflanzen mit der Wirkstoffzubereitung in wässeriger Lösung in der angegebenen Aufwandmenge besprüht. Nach Antrocknen des Spritzbelages werden die Pflanzen mit einer wässrigen Konidiensuspension von *Fusarium culmorum* inokuliert. Die Pflanzen werden dann im Gewächshaus unter lichtdurchlässigen Inkubationshauben bei ca. 22°C und einer relativen Luftfeuchtigkeit von ca. 100% aufgestellt. 6 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle F: *Fusarium culmorum-Test* (Weizen) / protektiv

| Wirkstoff | Aufwandmenge an Wirkstoff in ppm | Wirkungsgrad in % |
|-----------|----------------------------------|-------------------|
| (A-7) | 2000 | 80 |

Beispiel G: *Fusarium graminearum-Test* **(Gerste) / protektiv**

Zur Prüfung auf protektive Wirksamkeit werden junge Pflanzen mit der Wirkstoffzubereitung in wässeriger Lösung in der angegebenen Aufwandmenge besprüht. Nach Antrocknen des Spritzbelages werden die Pflanzen mit einer wässrigen Konidiensuspension von *Fusarium graminearum* inokuliert. Die Pflanzen werden dann im Gewächshaus unter lichtdurchlässigen Inkubationshauben bei ca. 22°C und einer relativen Luftfeuchtigkeit von ca. 100 % aufgestellt. 5 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle G: *Fusarium graminearum*-Test (Gerste) / protektiv

| Wirkstoff | Aufwandmenge an Wirkstoff in ppm | Wirkungsgrad in % |
|---|---|---|
| (A-7) | 2000 | 86 |

Beispiel H: *Septoria tritici-Test* **(Weizen) / protektiv**

Zur Prüfung auf protektive Wirksamkeit werden junge Pflanzen mit der Wirkstoffzubereitung in wässeriger Lösung in der angegebenen Aufwandmenge besprüht. Nach Antrocknen des Spritzbelages werden die Pflanzen mit einer wässrigen Sporensuspension von *Septoria tritici* inokuliert. Die Pflanzen verbleiben 48 Stunden bei ca. 20°C und einer relativen Luftfeuchtigkeit von ca. 100 % in einer Inkubationskabine. Danach werden die Pflanzen für 60 Stunden bei ca. 15°C und einer relativen Luftfeuchtigkeit von ca. 100 % unter eine lichtdurchlässige Inkubationshaube gestellt. Anschließend stehen die Pflanzen in einem Gewächshaus bei einer Temperatur von ca. 15°C und einer relativen Luftfeuchtigkeit von ca. 80 %. 21 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Tabelle H: *Septoria tritici-Test* (Weizen) / protektiv

| Wirkstoff | Aufwandmenge an Wirkstoff in ppm | Wirkungsgrad in % |
|---|---|---|
| (A-7) | 2000 | 75 |

Beispiel I: *Microdochium nivale-Test* **(Rasen) / protektiv**

Rasensamen (100 % *Agrostis stolonifera)* wurde in Schalen der Größe 38 cm x 15 cm x 9 cm ausgesät. 7 Tage nach der Aussaat wurde der Rasen geschnitten, noch bevor eine Guanidinium-Hydroxid Applikation in Aufwandmengen von 2000, 1000, 500 und 100 g/ha präventiv erfolgte. Die Wasseraufmengen betrugen umgerechnet 1000 L/ha. 24 Stunden nach der präventiven Applikation des Wirkstoffes erfolgte die Inokulation des Rasens, indem mit *Microdochium* nivale-befallene Weizenkörner ausgelegt werden. Jeweils 3 Weizenkörner wurden in eine einzelne Schale gelegt. Eine Bonitierung des anschließenden Pilz-Wachstums in den Rasenschalen erfolgte nach 5, 7, 14 und 21 Tagen. In den mit Guanidinium-Hydroxid behandelten Schalen konnte eine Wachstumshemmung von *Microdochium nivale* von bis zu 30 % (Abbott) festgestellt werden.

Tabelle I: *Microdochium nivale*-Test (Rasen) / protektiv

| Testkomponente | Aufwandmenge in ppm | Wirkung [in % Abbott] |
|---|---|---|
| (A-7) | 2000 | 30 |
| | 1000 | 27 |
| | 500 | 9 |
| | 100 | 0 |

**Patentansprüche**

1. Verwendung von polymeren Guanidinium-Hydroxiden auf Basis eines Diamins, welches Oxyalkylenketten und/oder Alkylengruppen zwischen zwei Aminogruppen enthält, erhältlich durch Polykondensation eines Guanidin-Säureadditionssalzes mit dem Diamin, wobei ein Polykondensationsprodukt in Salzform erhalten wird, welches anschließend durch basischen Anionenaustausch in die Hydroxidform überführt wird, zur Bekämpfung unerwünschter Mikroorganismen im Pflanzenschutz.

2. Verwendung gemäß Anspruch 1, **dadurch gekennzeichnet, dass** das polymere Guanidinium-Hydroxid Poly-[2-(2-ethoxy-ethoxyethyl)-guanidinium-hydroxid] mit mindestens 3 Guanidiniumresten ist.

3. Verwendung gemäß Anspruch 1, **dadurch gekennzeichnet, dass** das Polykondensationsprodukt in Salzform erhältlich ist durch Polykondensation eines Guanidin-Säureadditionssalzes mit einem Alkylendiamin und einem Oxyalkylendiamin im Molverhältnis zwischen 4:1 und 1:4 (Alkylendiamin/Oxyalkylendiamin).

4. Verwendung nach einem der Ansprüche 1 bis 3, **dadurch gekennzeichnet, dass** als Diamin ein Alkylendiamin der allgemeinen Formel

$$H_2N\text{-}(CH_2)_n\text{-}NH_2$$

vorgesehen ist, in welcher n eine ganze Zahl zwischen 2 und 10, insbesondere 6, ist.

5. Verwendung nach einem der Ansprüche 1 bis 3, **dadurch gekennzeichnet, dass** als Oxyalkylendiamin eine Verbindung der allgemeinen Formel

$$H_2N\text{-}[CH_2)O)]_n\text{-}(CH_2)_2NH_2$$

vorgesehen ist, in welcher m eine ganze Zahl zwischen 2 und 5, insbesondere 2, ist.

6. Verwendung gemäß einem der Ansprüche 1 bis 5, **dadurch gekennzeichnet, dass** die mittlere Molekularmasse des polymeren Guanidinium-Hydroxids im Bereich 500 bis 3.000 liegt.

7. Verfahren zur Bekämpfung von phytopathogenen Pilzen im Pflanzenschutz, **dadurch gekennzeichnet, dass** man das in den Ansprüchen 1 bis 6 verwendete polymere Guanidinium-Hydroxid auf das Saatgut, die Pflanze oder Früchte von Pflanzen ausbringt.

8. Verfahren gemäß Anspruch 7, **dadurch gekennzeichnet, dass** man bei der Behandlung von Blättern von 0,1 bis 10 000 g/ha, bei der Saatgutbehandlung von 2 bis 200 g pro 100 kg Saatgut einsetzt.

9. Wirkstoffkombinationen enthaltend wenigstens ein polymeres Guanidinium-Hydroxid gemäß einem der Ansprüche 1 bis 6 und wenigstens einen weiteren fungiziden Wirkstoff.

10. Wirkstoffkombinationen gemäß Anspruch 9, welche fungizid wirksam sind.

11. Mittel enthaltend Wirkstoffkombinationen gemäß Anspruch 9.

12. Mittel gemäß Anspruch 11 enthaltend weitere Hilfsmittel, Solventien, Trägerstoffe, oberflächenaktive Stoffe oder Streckmittel.

13. Verfahren zur Bekämpfung von phytopathogenen Pilzen im Pflanzenschutz, **dadurch gekennzeichnet, dass** man Wirkstoffkombinationen gemäß Anspruch 9 oder 10 oder Mittel gemäß Anspruch 11 oder 12 auf das Saatgut, die Pflanze, Früchte von Pflanzen oder den Boden, auf dem die Pflanze wächst oder wachsen soll, ausbringt.

14. Verfahren gemäß Anspruch 13, **dadurch gekennzeichnet, dass** man bei der Behandlung von Blättern von 0,1 bis 10 000 g/ha und bei der Saatgutbehandlung von 2 bis 200 g pro 100 kg Saatgut einsetzt.

15. Verwendung von Wirkstoffkombinationen gemäß Anspruch 9 oder 10 oder von Mitteln gemäß Anspruch 11 oder 12 zur Bekämpfung von unerwünschten phytopathogenen Pilzen im Pflanzenschutz.

16. Verwendung von Wirkstoffkombinationen gemäß Anspruch 9 oder 10 oder von Mitteln gemäß Anspruch 11 oder 12 zur Behandlung von Saatgut.

17. Verwendung gemäß Anspruch 16 zur Behandlung von transgenen Pflanzen.

18. Verwendung gemäß Anspruch 16 zur Behandlung von Saatgut transgener Pflanzen.

19. Saatgut, welches mit Wirkstoffkombinationen gemäß Anspruch 9 oder 10 oder mit Mitteln gemäß Anspruch 11 oder 12 behandelt wurde.

**20.** Saatgut, welches mit polymeren Guanidinium-Hydroxiden gemäß Anspruch 1 behandelt wurde.

Europäisches
Patentamt

European
Patent Office

Office européen
des brevets

**EUROPÄISCHER RECHERCHENBERICHT**

Nummer der Anmeldung

EP 07 15 0147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | ALBERT MARTIN ET AL: "Structure-activity relationships of oligoguanidines: Influence of counterion, diamine, and average molecular weight on biocidal activities." BIOMACROMOLECULES, Bd. 4, Nr. 6, November 2003 (2003-11), Seiten 1811-1817, XP002490825 ISSN: 1525-7797 * das ganze Dokument * ----- | 1-10 | INV. A01N47/44 A01P1/00 |
| Y,D | WO 01/85676 A (P O C OIL INDUSTRY TECHNOLOGY [AT]; SCHMIDT OSKAR J [AT]; SCHMIDT ANDR) 15. November 2001 (2001-11-15) * das ganze Dokument * ----- | 1-10 | |
| Y,D | WO 2006/047800 A (SCHMIDT OSKAR [AT]) 11. Mai 2006 (2006-05-11) * das ganze Dokument * ----- | 1-10 | |
| Y | EP 0 472 093 A (BASF AG [DE]) 26. Februar 1992 (1992-02-26) * Beispiele 2,5 * ----- | 1-10 | RECHERCHIERTE SACHGEBIETE (IPC) A01N |
| Y | US 3 475 375 A (YATES PAUL C) 28. Oktober 1969 (1969-10-28) * Spalte 2, Zeile 18 - Zeile 35 * ----- | 1 | |

~~Der vorliegende Recherchenbericht wurde für alle Patentans~~prüche erstellt

| Recherchenort | Abschlußdatum der Recherche | Prüfer |
|---|---|---|
| München | 26. September 2008 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☒ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**ANHANG ZUM EUROPÄISCHEN RECHERCHENBERICHT**
**ÜBER DIE EUROPÄISCHE PATENTANMELDUNG NR.**                    EP 07 15 0147

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2008

| Im Recherchenbericht angeführtes Patentdokument | Datum der Veröffentlichung | Mitglied(er) der Patentfamilie | Datum der Veröffentlichung |
|---|---|---|---|
| WO 0185676 A | 15-11-2001 | AR 028096 A1 | 23-04-2003 |
| | | AT 285395 T | 15-01-2005 |
| | | AU 5802101 A | 20-11-2001 |
| | | AU 2001258021 B2 | 23-02-2006 |
| | | BR 0111163 A | 08-04-2003 |
| | | CA 2408191 A1 | 15-11-2001 |
| | | CN 1438992 A | 27-08-2003 |
| | | DE 50104887 D1 | 27-01-2005 |
| | | EA 5462 B1 | 24-02-2005 |
| | | EG 22904 A | 30-10-2003 |
| | | EP 1280766 A1 | 05-02-2003 |
| | | ES 2234837 T3 | 01-07-2005 |
| | | HR 20020890 A2 | 28-02-2005 |
| | | HU 0301948 A2 | 29-09-2003 |
| | | JP 3927810 B2 | 13-06-2007 |
| | | JP 2003534404 T | 18-11-2003 |
| | | JP 2007092087 A | 12-04-2007 |
| | | MX PA02011111 A | 09-06-2003 |
| | | NZ 522871 A | 29-09-2006 |
| | | PL 358892 A1 | 23-08-2004 |
| | | PT 1280766 T | 31-05-2005 |
| | | US 2003113291 A1 | 19-06-2003 |
| | | YU 83702 A | 17-08-2006 |
| WO 2006047800 A | 11-05-2006 | EP 1809687 A1 | 25-07-2007 |
| EP 0472093 A | 26-02-1992 | CA 2048379 A1 | 23-02-1992 |
| | | DE 4026473 A1 | 27-02-1992 |
| | | DK 472093 T3 | 29-11-1993 |
| | | ES 2060260 T3 | 16-11-1994 |
| | | JP 4230654 A | 19-08-1992 |
| | | US 5242948 A | 07-09-1993 |
| US 3475375 A | 28-10-1969 | BE 716964 A | 02-12-1968 |
| | | DE 1768709 A1 | 26-04-1973 |
| | | FR 1577517 A | 08-08-1969 |
| | | GB 1202303 A | 12-08-1970 |
| | | LU 56318 A1 | 30-09-1968 |
| | | NL 6808691 A | 24-12-1968 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0185676 A
- WO 2006047800 A
- WO 03010149 A
- WO 04058723 A
- US 4272417 A

- US 4245432 A
- US 4808430 A
- US 5876739 A
- US 20030176428 A1
- WO 2002080675 A1
- WO 2002028186 A2

**In der Beschreibung aufgeführte Nicht-Patentliteratur**

- *Antibiotika Monitor,* 01. Februar 2006, http://www.antibiotikamonitor.at/06_12/06_12_inhalt.htm
- **R. Wegler.** Chemie der Pflanzenschutz- und Schädlingsbekämpfungsmittel. Springer Verlag, 1970, vol. 2, 401-412

- **Colby.** Calculation of the synergistic and antagonistic responses of herbicide combinations. *Weeds,* 1967, vol. 15, 20-22
- Isoboles, a graphic representation of synergism in pesticides. *Neth. J. Plant Path.,* 1964, vol. 70, 73-80